# EUROPEAN PATENT SPECIFICATION

(11) **EP 1 866 497 B1**
(45) Date of publication and mention of the grant of the patent: **02.08.2017**
(21) Application number: 06795350.5
(22) Date of filing: 08.03.2006
(51) Int. Cl.: E04C 2/04

(54) **EXTERIOR SHEATHING WEATHER BARRIER CONSTRUCTION AND METHOD OF MANUFACTURE**
ÄUSSERE VERKLEIDUNG ALS WITTERUNGSSCHUTZ UND HERSTELLUNGSVERFAHREN DAFÜR
ELEMENT DE CONSTRUCTION POUR REVETEMENT DE PROTECTION CONTRE LES INTEMPERIES ET PROCEDE DE FABRICATION

(30) Priority: 11.03.2005 US 78518
(43) Date of publication of application: 19.12.2007
(73) Proprietor: BPB Limited, Binley Business Park Coventry CV3 2TT (GB)
(72) Inventor: HAUBER, Robert, J., Lutz, FL 33558 (US); HENNIS, Mark, E., Clearwater, FL 33765 (US); FAHEY, Michael, P., St. Petersburg, FL 33702 (US); BOYDSTON, Gerald, D., Cody, WY 82414 (US)
(74) Representative: Chapman, Helga Claire
(86) International application number: PCT/IB2006/002341
(87) International publication number: WO 2007/004066

(56) References cited:
- EP-A- 1 455 028
- US-A1- 2002 187 296
- US-A1- 2004 035 062

## Description

### BACKGROUND OF THE INVENTION

### 1. Field of the Invention

This invention relates generally to building components, and more particularly, relates to glass-reinforced gypsum board for use as exterior sheathing in building construction.

### 2. Background Art

Gypsum board, and its production, has received attention in the building industry, and especially for providing an easily worked building material the consistency of which is available for general construction use. Desirable characteristics for gypsum board also include a smooth working surface, consistent thickness throughout, and the ability to provide finishing enhancements, such as paint or other protective coverings, thereon.

US 2002/187,296 discloses a multilayer gypsum board, according to the preamble of claim 1.

Recent developments in the manufacture of gypsum board have also added to the durability and versatility of the uses to which gypsum boards may be put.

A particularly useful development in the building board field is known as glass reinforced gypsum (GRG) board. GRG board and its manufacture are well known in the construction industry, and it is described in commonly owned U.S. Pat. No. 4,378,405, incorporated herein by reference. Products made according to U.S. Pat. No. 4,378,405 are sold by the common assignee, BPB, Ltd., under the name "Glasroc." GRG board, of generally conventional construction, is comprised of a gypsum core having a non-woven glass mat immediately below one or both principal surfaces. In the aforementioned U.S. Pat. No. 4,378,405, the mat is introduced into the core by vibrating the core slurry, which either overlays or underlays the mat, to cause the slurry to pass through the mat, so that the surface layer or layers of gypsum are integral with the core. GRG boards are considered stronger than conventional paper boards and exhibit superior fire resistance.

Manufacture of GRG boards compromises the need to provide strength by employing non-woven glass fiber mat of relatively low diameter (for example, 13 .µm (0.005 inch)) fibers with the need to ensure efficient exhaustion of air through a mat from the gypsum slurry from which the board is formed. This is a particular problem at the edge margins of the board where the bottom mat is brought up and onto the upper surface of the board to define the edges of the uncut board. Inefficient exhaustion of air in this region can lead to voids in the edge margins of the cut boards, reducing the edge strength of the boards.

The problem of voids in the edge margins has been dealt with by increasing the fiber diameter of the mat, particularly the bottom mat (to, for example, 16 µm (0.0065 inch)), allowing easier exhaustion of air and penetration of gypsum slurry, but which consequently may result in a reduction of board strength.

Additional compromises in optimization between concerns of cost and of effectiveness arise from the amount of penetration of slurry through the glass mat fibers. In order to ensure that slurry penetrates essentially throughout the surface of the glass mat fibers, aforementioned U.S. Pat. No. 4,378,405 teaches the use of vibration, for example, by vibrators, as disclosed therein. The vibrators vibrate the glass mat and slurry composition to ensure that the "slurry penetrates through the fabric" of the glass mat fibers to form a thin continuous film on the outer surface of the glass mat fibers.

It has been found desirable to form a thin film of slurry on the outer face surface of the glass mat, to avoid exposed fibers of glass, and so to present a smooth working gypsum board surface that can be handled by construction workers without necessitating protective covering of the hands. It has been found that when gypsum boards with exposed glass fibers, such as those taught, for example in U.S. Pat. Nos. 4,647,496; 4,810,659; 5,371,989; 5,148,645; 5,319,900; and 5,704,179, are handled at a construction site by workers, exposed glass fibers penetrate the skin of uncovered hands, and this generally results in worker discomfort. It has been further found that later finishing, e.g., painting, of a smooth gypsum board surface is more desirable because the need for additional prefinishing steps, such as priming, etc., may be minimized.

Commonly-owned U.S. Patent No. 6,524,679, referenced above as the parent application on which this invention claims priority, has been proposed as an all-purpose building material for use as internal walls of a building. The teaching of U.S. Patent No. 6,524,679 are incorporated by reference herein. The gypsum board resulting from practice of the teaching therein provides a board having advantages over prior art boards, as described. However, in order for those gypsum boards to be utilizable in exterior sheathing, additional features have been developed for use therewith as more fully described below.

Manufacturing facilities for the production of gypsum board, whether or not glass mats are utilized for the structural facings, are capital intensive in the costs of space, equipment and in the down time during which a gypsum board production line is reconfigured. For production of a variety of gypsum board products, for example, standard paper faced gypsum board, glass mat backed board, etc., down time of the production line represents a significant cost in the delay of production of gypsum board and in time wasted by production workers who remain idle.

It has been found advantageous to provide a gypsum board production facility that is easily modified, without long periods of shutting down production, when a production line is being switched from the production of one type of gypsum board to another.

Another consideration in establishing a gypsum board production line arises from the long time required for gypsum slurry in liquid form to be formed, and to set up in a process known as hydration, then to be cut, then processed and dried to remove the water from the set gypsum. To perform the complete process takes a predetermined amount of time, which is an uncompromising restraint on the amount of gypsum board that can be processed on a gypsum board line.

To accommodate these concerns, standard gypsum board lines have been increased in length so that sufficient time elapses as the gypsum travels along the line to permit production, hydration and curing of the gypsum boards, while simultaneously increasing the output of gypsum board being produced on a single board line.

It is important for the board line to run at a sufficient speed, meanwhile maintaining the desired output of gypsum board, while also retaining the efficient operation and consistent quality of the gypsum board produced. Thus, the continuous feed of unset gypsum board is preferably matched with the speed of the conveyor belt as it takes up the gypsum board for the hydration and curing steps occurring down the stream from the gypsum board formation station. Efficient processes for gypsum board must use a production line, therefore that has a length dependent on the rate of desired production, so that the gypsum board becomes fully hydrated and cured at the end of the conveyor belt run.

Additional compromises in optimization between concerns of cost and effectiveness arise from the amount of penetration of slurry through the mineral or glass mat fibers when these are utilized as facing materials. In order to ensure that unset gypsum slurry penetrates essentially throughout the surface of the glass mat fibers, aforementioned U.S. Pat. No. 4,378,405 teaches the use of vibration, for example, by means of vibrators, as disclosed therein. The vibrators vibrate the glass mat and slurry composition to ensure that the "slurry penetrates through the fabric" of the glass mat fibers, to form a thin continuous film on the outer surface of the glass mat fibers.

It has been found desirable to form a thin film of slurry on the outer face surface of the glass mat, to avoid exposed fibers of glass, so as to present a smooth working surface of the gypsum board that can be handled without protective covering of the hands. It has been found that when gypsum boards with exposed glass fibers, such as those taught, for example, in U.S. Pat. Nos. 4,647,496; 4,810,569; 5,371,989; 5,148,645, 5,319,900; and 5,704,179, are handled at a construction site by workers, glass fibers penetrate the skin of uncovered hands and result in discomfort. It has been further found that further finishing, e.g., painting, of a smooth gypsum board surface, is made easier because the need for additional prefinishing steps, such as priming, etc., may be minimized.

Although the smooth surface of gypsum boards provided by the process utilized in aforementioned U.S. Pat. No. 4,378,405 has been found adequate, it is desirable that the operation of the gypsum board line be run quickly and with a more efficient use of available resources. Although the smooth surface of gypsum boards provided by the process utilized in aforementioned U.S. Pat. No. 4,378,405 is adequate to achieve the stated purposes, the process of manufacture, and especially the vibration steps, tend to slow down board production operation and to render the process useful only for specialized applications for which a customer is willing and able to contend with delays in production and in the consequential costs. Moreover, it is not possible to utilize the process of making GRG gypsum boards as taught by U.S. Pat. No. 4,378,405 in a standard gypsum board line because that process requires structural changes to the board production line, which may take time and capital to effectuate.

Another consideration that must be accommodated in terms of timing is the desirability of the gypsum slurry to penetrate through the glass fiber mat so as to produce a clean, smooth surface on the faces of the gypsum board, without unexposed glass fibers extending along the surface. The need to allow sufficient time for the gypsum slurry to penetrate through the mat also restricts the speed of the gypsum board manufacturing line.

It has been found desirable to provide a gypsum board and manufacturing process thereof which can be manufactured at relatively high speed, has high structural integrity and strength by virtue of using a mat of relatively low diameter fibers, and may include in a face coating a polymeric additive material providing a surface ideal for further finishing of the gypsum board. The production process for making gypsum board products according to this invention is capable of quick and efficient change over, for changing of the gypsum board production line, for example, from a board line producing paper faced gypsum board to one producing one or more gypsum boards described herein as embodiments of the gypsum boards according to the present invention.

The present invention can provide an inventive product by utilizing the process according to the present invention and the inventive gypsum board manufacturing facility can provide the capability to quickly change over from a standard plasterboard line, for example, which produces paper backed gypsum boards, to a process utilizing glass mats that become completely covered by a thin film of gypsum, according to the present invention, without requiring breakdown and rebuilding of the production line. The production line, according to this invention, further may be used to produce an embodiment of the present invention which includes a gypsum board having a surface that is relatively smooth and can be utilized or finished without other preparation.

The present invention further may provide a gypsum board providing a weather resistive barrier for use as an exterior wall surface. Weather resistive barriers are provided on exterior wall surfaces to protect building materials from a variety of weather conditions, including the effects of wind, bulk water, in the form of precipitation, thermal extremes and ultraviolet and sunlight. The weather barrier provides a protective skin for preventing water from penetrating the barrier while permitting the diffusion of water vapor to permeate to the external environment. The barriers not only prevent direct water damage to building materials, but also help to control the growth of mold and mildew that thrive in a moist environment, and which can be detrimental to the health of occupants.

Previously, weather resistive barriers in the form of building paper or polyethylene housewrap was fastened over the exterior wall. These building papers and housewraps usually result in airspace between the exterior walls and the barrier. These air gaps between the exterior walls of a building and the building wrap provide a locus for accumulation of undesirable moisture that has no means of escape, and thus cause damage to the building walls from continual exposure to moist or wet conditions. Moreover, prior art building wraps, such as polyethylene wraps, deteriorate over time, being affected by, for example high winds, and sunlight, so that the rated life of such building wraps is limited to about 3 to 6 months, before they must be covered to avoid further deterioration of their water barrier properties.

The glass reinforced gypsum boards made in accordance with the teachings of aforementioned U.S. Patent No. 6,524,679 are utilizable for exterior sheathing applications, but nevertheless are not ideally suited therefor because once installed, the gypsum boards do not provide a complete shield and/or an optimal permeability to water vapor so as to permit any accumulated water to be dispelled from within the walls. For example, the fasteners used to fasten the exterior sheathing gypsum boards and the butt joints at the ends of and between adjacent boards provide small, but undesirable ,leak paths for moisture to pass through. Thus the present invention addresses this problem and is provided to further augment the weather barrier properties of the gypsum glass reinforced boards by more effectively sealing these leak paths.

### SUMMARY OF THE INVENTION

According to a first aspect of the present invention, there is provided a gypsum board panel as claimed in the accompanying claims.

According to a second aspect of the present invention, there is provided a method of manufacturing a gypsum panel according to the first aspect of the invention as claimed in the accompanying claims.

Accordingly there is disclosed herein a method of manufacture of gypsum board having inorganic fiber face sheets, comprising the steps of depositing a predetermined amount of first gypsum slurry having a first consistency onto at least one continuous sheet of randomly aligned inorganic fiber material having random interstices between the fibers by passing at least one continuous inorganic fiber sheet through a gypsum application station, the station including two applicator wheels through which pass the inorganic fiber sheet, so as to cause the first gypsum slurry having a first consistency to penetrate through the random openings between the inorganic fibers and thereby to coat both top and bottom surfaces of the inorganic fiber material with the gypsum having a first consistency, directing the first inorganic material from the gypsum slurry application station to a first forming plate, depositing a second gypsum slurry having a second consistency on the first inorganic fiber material and causing the second gypsum slurry to be essentially evenly distributed over an upwardly facing top surface of the first inorganic fiber sheet, applying a third gypsum slurry having a third consistency to a second of at least one continuous inorganic fiber sheets, and causing the third gypsum slurry to penetrate essentially completely through random interstices in the second inorganic fiber sheet, applying the second inorganic fiber sheet onto the second gypsum slurry thereby sheathing the second gypsum slurry within the first and second inorganic fiber sheet to form a wet gypsum board, passing the wet gypsum board through a board forming station having a lower forming plate and an upper forming plate, the upper forming plate comprising sections and defining at least one predetermined angle relative to the lower forming plate, the vertical separation between the lower plate and at least one section of the upper plate having a predetermined vertical dimension substantially equal to the desired thickness of the manufactured gypsum board. Alternatively, a forming wheel may be utilized to provide gypsum board having a predetermined thickness. Optionally, an edger bar may be used to smooth and otherwise complete the surface finish of the gypsum board and to provide a finishing profile to the board edges to further diminish or eliminate the possible leak path at the board joints. In a second embodiment, the method includes adding one or more polymeric additives to the gypsum slurry of one or both surfaces, and further application of specified adhesives to predetermined locations in the board surface to seal the passages of the fasteners.

In another embodiment, a gypsum board panel comprising a first layer of set gypsum comprising a first layer of a mixture of set gypsum having an outer surface and at least one polymeric compound entrained within the set gypsum, and being impregnated within a thin sheet of randomly aligned inorganic fibers, the outer surface of the sheet being essentially encased within the set gypsum and polymeric compound, a second layer comprised of set gypsum, the set gypsum in the second layer being of a lower density than the set gypsum in the first layer; and a third layer having an outer surface comprising set gypsum impregnated with a second thin sheet of randomly aligned inorganic fibers, the outer surface of the third sheet being essentially encased within the set gypsum of the third layer; the set gypsum in the first being integrally bonded to the gypsum of the second layer and the set gypsum in the second layer being bonded integrally to the gypsum in the third layer.

Gypsum board or other exterior sheathing is provided with structural interconnecting tongue and groove edges to create a more complex machine edge to inhibit passage of moisture. In a preferred embodiment, an adhesive is disposed in the machine edge to effectively fill the gap between adjacently aligned boards thereby to inhibit passage of water and moisture. The tongue and groove interconnection provides added structural stability and strength at the joints between adjacent board panels, and a wall surface that inhibits or eliminates leak paths for moisture and water vapor.

The exterior surface of the sheathing may further be provided with a sealant layer that seals the opening through which a fastener is driven to attach the sheathing to a supporting frame. Over the sealant layer and/or exterior surface, a water shedding secondary layer may be provided to enhance the water repelling capabilities of the sheathing, and to protect the sealant layer.

### BRIEF DESCRIPTION OF THE DRAWINGS

FIG. 1 is a diagrammatical, cross-sectional view of the gypsum board forming station according to the present invention;
FIG. 2 is a detailed, cross-sectional, diagrammatical view of the vibrator sub-assembly shown in FIG. 1;
FIG. 3 is a detailed, cross-sectional, diagrammatical view of FIG. 1, showing the top sheet sub-assembly according to the present invention;
FIG. 4 is a top plan view of the edger flapper bar feature according to the present invention;
FIG. 5 is a side view in detail of the edger flapper bar shown in FIG. 4;
FIG. 6 is a detailed top view of the edger flapper bar feature shown in FIG. 4;
FIG. 7 is a detailed, cross-sectional, diagrammatical view of a gypsum board according to the present invention manufactured utilizing the inventive gypsum board production process and the forming station shown in FIG. 1;
FIG. 8 is a side view of a second embodiment of an edger flapper assembly feature according to the present invention;
FIG. 9 is a top view in detail of the edger flapper bar shown in FIG. 8;
FIG. 10 is a detailed side view of the edger flapper bar feature shown in FIG. 8;
FIG. 11 is a detailed, cross-sectional, diagrammatical view of a gypsum board traveling through the edger bar assembly according to the present invention as shown in FIGS. 8-10;
FIG. 12 illustrates a schematic, diagrammatic elevational view of the gypsum board final forming apparatus according to the present invention;
FIG. 13 illustrates a top diagrammatical view of the gypsum board production and transportation line including the gypsum board final forming apparatus shown in FIG. 12;
FIG. 14 shows in a detail elevational view the final forming apparatus of FIGS. 12 and 13 in greater detail;
FIG. 15 shows a detailed cutaway elevational view of a portion of the final forming apparatus of FIG 12;
FIGS. 16 and 17 illustrate two opposed machine edges in accordance with the pre sent invention;
FIGS. 18 and 19 illustrate two opposed edges in accordance with a second embodiment of the invention;
FIG. 20 is a schematic representation of another embodiment of an edger, shown in a plan view, for providing the machine edge showing FIG. 16;
FIG. 21 is a cross-sectional view of the edger, taken approximately along section lines 21-21 of FIG. 20;
FIG. 22 is a perspective view of a section of an edger for providing an opposed machine edge, as shown in FIG. 17;
FIG. 23 is a cross-section of the edger, taken approximately along lines 23-23 of FIG. 22;
FIG. 24 is a plan view of a portion of the edge shoe for providing a machine edge as shown in FIG. 18, according to yet another embodiment of the invention;
FIG. 25 is a cross-section, taken approximately along line 25-25 of the edge shoe of FIG. 24;

### DETAILED DESCRIPTION OF THE PREFERRED EMBODIMENTS

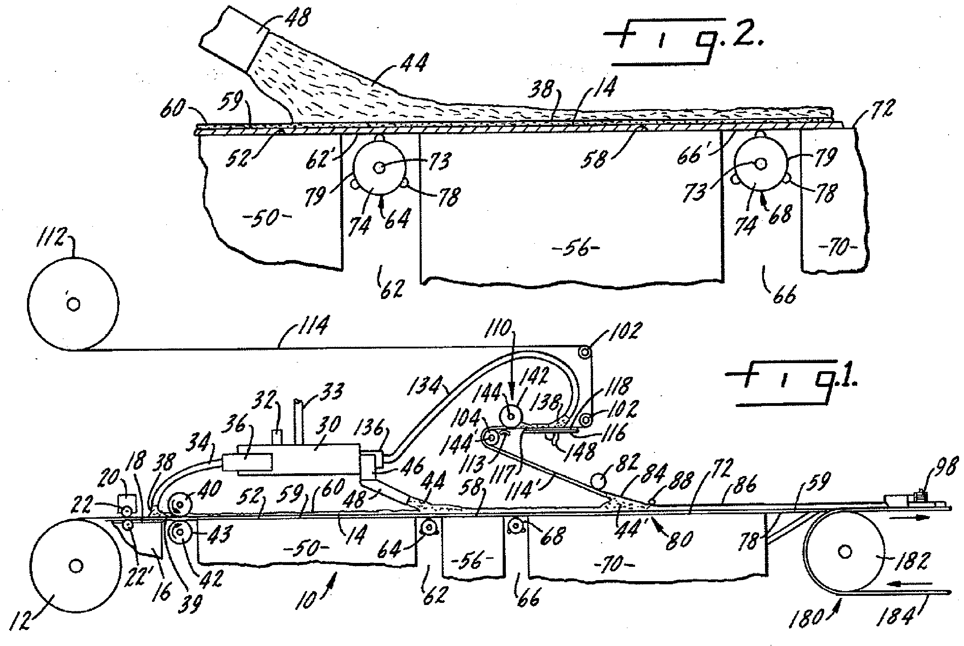

In the diagrammatical, cross-sectional illustration of FIG. 1, the board forming station 10 of an inventive embodiment of the inventive plant is shown. Although illustrated in cross-section, the station 10 is shown diagrammatically to clearly depict the separate elements in relation to each other. Modifications to the arrangement are possible and distances between the separate elements are not to scale for simplicity of illustration, but a pragmatic and efficient arrangement will come to mind to a person having ordinary skill in the art.

The inventive plant 10 comprises a supply roll 12 that provides feed of a continuous sheet of facing material that, in the arrangement shown, defines a bottom-embedded sheet 14. The supply roll 12 may feed out a sheet comprising any conventional material used in gypsum boards, for example, paper or paper board, but for purposes of the present invention, the material of bottom embedded sheet 14 preferably comprises a mat of long inorganic, e.g., glass, fibers which will be more clearly described below with reference to the formation of the inventive gypsum board product, when the inorganic fibers comprise a glasso-glassive fiber, the products being, sometimes referred to herein as glass reinforced gypsum ("GRG") boards.

The supply roll 12 pays out the continuous bottom embedded sheet 14 over a first forming table 16, having an upwardly facing surface 18, provides a working surface for further processing of the bottom embedded sheet 14. The first forming table 16 also provides a support for creaser wheel assembly 20, disposed athwart the surface 18.

The sheet 14 may be extracted from the supply roll 12 by motion of the sheet being pulled through the board forming station 10 by the belt line, as will be described. The two creaser wheels are vertically disposed within the creaser wheel assembly 20, one set of wheels 22 above the bottom embedded sheet 14 cooperate with a second set of wheels, referred to as the wheel anvil 22', below the sheet 14. The creaser wheels 22, 22' rotate on axles and produce partially cut edge creases on the sheet 14 adjacent to each of the longitudinal edges of the bottom-embedded sheet 14. The edge creases are spaced to allow varying fold thicknesses and to cause the edges to turn upwardly so as to retain slurry poured onto the bottom-embedded sheet 14 downstream of the creaser wheel assembly 20, as is described below.

A continuous mixer 30, accepting raw materials, i.e. stucco, plaster, gypsum (in powder form), water and other additives, through one or more inlets, one of which inlets 32 is shown in FIG. 1. The mixer 30 provides a mixing capacity that formulates a desirable density of wet gypsum slurry by, for example, rotating a mixing blade (not shown) via a drive shaft 33. Because it is a desirable feature for this invention to produce a multi-layer gypsum board, the mixer 30 may comprise separate mixing chambers (not shown in FIG. 1) for providing separate, and different slurry mixtures. A continuous mixer, which could be utilized in this invention, is described and illustrated in commonly-owned U.S. Pat. No. 5,908,521, which is incorporated by reference as if fully set forth herein.

The continuous mixer 30 thus provides several outlets for gypsum slurry each having varying desirable characteristics depending on the function of the slurry layer for which any specific outlet is producing gypsum slurry. Each outlet includes an output control for controlling the amount of gypsum slurry permitted to flow through the outlets and into the gypsum board forming plant. The control may be one or more slurry delivery mechanisms, as described in aforementioned U.S. Pat. No. 5,908,521, which have controlled variable delivery speeds so that only the desired amount of gypsum slurry is pumped through the outlets.

Referring again to FIG. 1, mixer 30 comprises a first slurry outlet 34, controllable by a control device 36, which allows for the continuous flow of a slurry mixture having desirable characteristics, as described in aforementioned U.S. Pat. No. 5,908,521. In this embodiment, mixer 30 is set to provide two types of slurry. Control device 36 delivers a denser gypsum slurry mixture that is ultimately utilized adjacent the facing of the completed gypsum board, as will be described below.

The end of the slurry outlet 34 extrudes the gypsum slurry directly onto the bottom-embedded sheet 14, which is continuously moving over the surface 18 of forming table 16. Slurry outlet 34 preferably comprises a rubber boot, but other types of outlets may be used, for example flexible hoses or piping. Preferably, the gypsum slurry 38 is poured onto the upwardly facing surface of the sheet 14 at a position where it is supported by the forming table surface 18, and a predetermined amount of dense gypsum slurry is deposited over the continuously moving sheet 14 so as to coat the internal surface of bottom face sheet 14. It should be noted that this upwardly facing internal surface of sheet 14 is normally destined to be an inner surface of the bottom-embedded sheet 14, and will be embedded inwardly from the board surface when the gypsum board is fully formed. To ensure that the dense gypsum slurry 38 is evenly spread out over the top surface of the bottom face sheet 14, a set of roller wheels 40, 42, also referred to herein as roll coaters 40, 42, are positioned again vertically over and under the sheet 14. The wheels 40, 42 can rotate in forward or reverse directions.

One advantage and benefit which derives from use of rotating roller wheels 40, 42 is that in addition to providing a smooth, evenly spread surface coating over the mat comprising the bottom embedded sheet 14, the dense slurry layer 38 deposited on the inner mat surface is forced, by the top roller wheel 40, to extend through the sheet 14 and to form a structurally integral surface. The surface layer of gypsum slurry 38 may be modified to include additives, such as an engineered polymer, to provide structural strength and load carrying capability to the gypsum board product. As will be described, the optional polymer additive may also present a polymer matrix that provides a water impervious surface having desirable performance characteristics, such as, plastic sheathing, or water repelling, properties so as to expand the possible uses of the gypsum board products to both indoor and outdoor use.

In a preferred embodiment of the invention, the material comprising the bottom-embedded sheet 14 is a mat of randomly aligned mineral, e.g., glass, fibers, having an average fiber diameter of 13-16 µm (0.005-0.0065 inches), and including a binder to hold the glass fibers in the form of a glass fiber mat having a desirable thickness. Such glass fiber mats are known for use in the production of gypsum board, for example, see aforementioned U.S. Pat. No. 4,378,405 and WIPO Publication No. WO9809033 (European Patent No. EP 0 922 146). Use of a mineral fiber mat, which is porous to water generally, provides added structural strength to the gypsum board. The porous nature of the mineral fiber mat also permits gypsum slurry to penetrate through the pores between the mineral fibers and to permeate so as to cover both the top surface and through slurry penetrating the bottom surface of bottom embedded sheet 14 because of slurry penetration. Thus, as the bottom embedded sheet 14 passes through the roll coaters 40, 42, the unset higher density gypsum 38 is coated over the mineral fibers and is forced in the roll coating process to penetrate through the bottom embedded sheet 14 and coat each of its top and bottom surfaces with an unset denser gypsum layer 38. Ideally, the high-density gypsum 38 is forced to penetrate 100% through the glass mat sheet 14, although manufacturing tolerances may permit penetration of approximately 95-98%.

In a preferred form, the roll coaters 40, 42 cause penetration of the unset denser gypsum slurry 38 to coat the bottom surface of the glass mat bottom sheet 14. This bottom surface of the bottom-embedded sheet 14 will ultimately become the embedded surface of the completed gypsum board products. Preferably, the unset gypsum slurry 38 is caused to form a dam 39, which then impregnates a continuous layer of unset gypsum through to the bottom surface of the glass mat 14 to form a dense slurry gypsum layer having a thickness that is in a range from approximately 0.01 to 2.0 mm, as measured from the outermost surface of glass mat 14. Although penetration of the slurry 38 may not result in a continuous layer having a discrete thickness, nevertheless the process preferably will result in each of the glass fibers, comprising the glass fiber mat 14, in being coated on its surface so that very few or no exposed uncoated glass fibers remain.

The speed of rotation of the rollers 40,42 may be adjustable depending on the viscosity of the density of gypsum slurry 3 8, the speed of linear travel of the glass fiber mat 14 and the amount of the gypsum slurry 38 to be applied to the mat 14. In effect, the roll coaters 40, 42 serve to deliver the slurry 38 through the small random openings between, fibers of mat 14 and deposit the material on the top of the fabric web in greater or lesser amounts, as desired, filling the openings and coating both the bottom face as well as the top face of mat 14.

Although the roll coaters 40, 42 are shown rotating in the direction of travel of the bottom embedded sheet 14, it is possible, and in some embodiments of this invention, desirable to have the roll coaters rotate in the opposite direction from that shown in FIG. 1. In such case, a mechanism such as a forming belt line, disposed downstream of the roll coaters 40, 42, described below, is utilized to provide a motive force for pulling the bottom embedded sheet 14 through the gypsum board forming station 10, even against the reactive forces produced by counter-rotating coater rolls. Of course, alternatively, other means may be utilized at different locations in the processing production line to provide the motive force for moving the sheet 14 through the station 10, for example, another set of rollers downstream (not shown) that pull the mat 14 toward the right. It should be noted that the gypsum slurry layer on the top surface of bottom embedded sheet need not be absolutely level or completely even since subsequent steps in the process may provide additional smoothing opportunities, as will be described below.

Gypsum composite building panels with mineral fiber embedded sheets may be produced in multiple layers, including, but not limited to, a strong, denser upper and lower surface layers and a less strong and less dense middle layer or core. The layered structure is advantageous as it allows the gypsum board to have a reduced weight, without sacrificing the composite structural strength of the final gypsum board product. Thus, and in accordance with the teachings of aforementioned U.S. Pat. No. 5,908,521, the continuous mixer 30 is configured to provide a second, less dense gypsum slurry, referred to as core gypsum slurry 44 or simply slurry 44, which comprises the bulk of the material in the finished gypsum board products. The core gypsum slurry 44 is pumped out of the mixer 30 by a control device 46 and through an outlet 48, which may comprise a rubber boot or hose. A continuous layer of the unset slurry 44 is caused to form onto the laterally moving combination bottom embedded sheet 14 and layer of dense slurry 38.

The core slurry 44 may comprise a different composition of constituent material than the dense gypsum slurry 38, for example by the addition of filler or strengthening additives, as is known, or may simply comprise the same constituent elements but may have a lighter or less dense consistency because the gypsum slurry 44 contains foaming materials therein, which are not added to the dense slurry 38. It is known that a longer mixing time for the unset gypsum causes more of the entrained air bubbles, sometimes referred to as foaming, to reach the surface of the unset gypsum and thus to be removed from the unset gypsum slurry material. It is the greater amount of air, entrained as miniscule air bubbles, which gives rise to the lighter, less dense core gypsum slurry 44.

Gypsum slurry, and especially gypsum slurry that has been modified with polymer additives, has adhesive characteristics in its wet state that present some difficulty in handling. Accordingly, a film coating 43 is preferably provided on at least one of the roll coaters, preferably roll coater 42, which allows for easier continuous separation of the coater wheel surface from the surface of the wet gypsum surface while simultaneously depositing the majority of the gypsum slurry 38 on the mat of sheet 14. Materials for such a film coating surface include appropriate polymers, such as a Teflon^{®} coating, that are capable of providing a firm surface yet avoiding gypsum slurry adhering or clinging to the surface of the roll coater wheels.

Another important reason for providing a denser slurry layer, in conjunction with a lighter core slurry layer in the gypsum board, is that the boundary between the dense slurry layers 38, and the core slurry layer 44 provides an inhibiting barrier that serves to control and inhibit the migration of the polymer additives from the surface dense slurry layer 38 to the core slurry layer 44. This migration is most likely to occur during the conventional heat rendering process, described below, used for drying the finished board product. The resulting board product is rendered better equipped to retain the polymer additives in the surface dense slurry layer 38, which thus form a better, more uniform polymer matrix base or "root system" for co-polymer formation with finishing products, as is described below.

As the dense gypsum layer 38 dries and cures, the polymer additives entrained therein migrate toward and through the underlying fiber embedded sheet 14 and the migration may extend into the core slurry layer 44 in the form of tendrils or roots that provide for a greater integrity in the bond formed between the core gypsum layer 44, the fiber sheet 14 and the overlying dense slurry layer 38. Moreover, because the lighter gypsum layer 44 includes an entrained foam, and the dense slurry layer 38 does not, the penetration of the additive materials is deeper into the layer 44. This bonding produced by the impregnated additive polymeric material improves matrix formation, ultimately improving the surface hardness and structural integrity of the finished gypsum board, and provides a strong outer shell to the board and also improves the load bearing capacity, contributing to its flexibility.

Referring again to FIG. 1, after passing through the roll coaters 40, 42, the bottom embedded sheet 14 passes onto a second forming table 50 having a horizontal forming surface 52. Although the first forming table 16 and second forming table 50 are shown as separate tables in the diagrammatic rendition of FIG. 1, it is possible and in certain cases preferable, that the forming table comprises one elongated table (not shown) with several cutout portions within which, for example, the creaser wheel assembly 20, or the roll coaters 40, 42 and vibrators, are mounted.

To facilitate the transport of the bottom-embedded sheet 14, including the weight of the dense slurry 38 and core slurry 44, a non-stick table deck 59 is disposed over the surface 52 of table 50. Referring now to FIG. 2, which is a detailed view of FIG. 1, an upwardly facing surface 60 of table deck 59 provides a working surface for the production of gypsum board. Preferably, the table cover comprises a smooth, non-stick material, such as stainless steel, an elastomeric material, e.g., rubber, or a polymeric material, e.g., Formica^{®} and is of sufficient structural strength to support the moving weight of the slurry 44 deposited on the table 50.

As is evident in the detailed cross-sectional view of FIG. 2, the table deck 59 rests directly on surface 52 of table 50, so that as the core slurry 44 is deposited on the bottom embedded sheet 14, the weight of the slurry 44 places downward pressure on the sheet 14, resulting in flattening of the under surface of the sheet 14 against the surface of the table deck 59. However, because of the smooth, non-stick characteristics of the table deck 59, the bottom embedded sheet 14 and slurry 38, 44, freely traverse over the forming tables, as described below.

The cross-sectional view of FIG. 1 also does not show the width of the outlet spouts 34 and 48. Various known configurations may be utilized, including an elongated spout that is disposed transversely to the direction of board travel. Such spouts may output a sheet of gypsum slurry across the width of the mat 14. Alternatively, a tubular spout attached to a rubber boot (as shown) deposits a continuous stream of gypsum slurry onto the glass fiber sheet 14. That gypsum slurry stream may then be spread out, before reaching the roll coaters 40, 42, to provide a smooth surface over the sheet 14 by, for example, diagonally angled vanes (not shown) or by specially constructed rollers or a dam that spread the gypsum slurry from the center toward the edges of bottom sheet 14. The exact shape of the spouts is not considered to be critical to this invention, as long as the function is achieved of evenly spreading the gypsum slurry over the entire width of the mat of both the bottom and top sheets.

The unset, less dense core gypsum slurry 44 is deposited on the penetrated bottom embedded sheet 14 at or adjacent a third forming table 56, having a top surface 58, for supporting the combination of penetrated mat 14 and slurry 44. An opening 62 between the second forming table 50 and third forming table 56 provides a space for disposing a first deck vibrator 64, and another opening 66 provides for mounting a second deck vibrator 68 between the third forming table 56 and a fourth forming table 70, having a top surface 72. Such vibrators are described in U.S. Pat. No. 4,477,300, which is incorporated by reference herein.

As shown more clearly in the detailed view of FIG. 2, the table deck 59 extends between the first and second forming tables 50, 56 over the opening 62, and also between the third and fourth forming tables 56, 70 over the opening 66. Because each of the tables 50, 58, 70 are disposed so that their surfaces 52, 58, 72 are coplanar, the table deck 59 mounted onto the table is vertically fully supported across essentially the full length of the gypsum board forming station 10, i.e., across the full length defined by second to fourth forming tables 50, 56, 70.

As shown in FIG. 2, deck vibrators 64,68 each comprise rolls 74, which are mounted immediately adjacent sections of the table deck 59 covering the upper portion of the respective openings 62, 66. Each of the deck vibrator rolls 74 are mounted to rotate around axles 76, both extending horizontally in a direction transversely to the direction of travel of the board production line. Each of the rolls 74 has a diameter that is just slightly less than the radial distance between each axis 76 and the bottom surface 62', 66' of the table deck 59 covering the respective openings 62,66.

Each deck vibrator 64,68 further comprises a plurality of bumps 78 which extend radially beyond the outer surface 79 of the deck vibrator rolls 74. Bumps 78 extend longitudinally along the surface 79 of the rolls 74 in a direction parallel to the axis 76. As the deck vibrator rolls 74 rotate about axis 76, the bumps 78 routinely strike the underside surfaces 62', 66' of the table deck 59, which momentarily lifts the table deck 59, together therewith the bottom embedded sheet 14 and slurry 38, 44, combination, which agitates the slurry resting on sheet 14. Such agitation causes the slurry 38 to even out over the upper surface of the penetrated mat 14 and also causes the slurry 44 to more completely permeate through and bond with the denser slurry 38 located on the upper surface of the bottom embedded sheet 14.

Another feature provided by the deck vibrators 64,68, is the "kneading out" of larger entrapped foam air bubbles from the bottom surface of the bottom embedded sheet 14. As the bottom-embedded sheet 14 passes over the openings 62, 66, the denser slurry 38, which has penetrated through the mat of bottom embedded sheet 14, is still unset and continues to have entrained air bubbles within the gypsum slurry and adjacent bottom sheet surface. Vibration from the deck vibrators 64, 68, causes these foam bubbles to reach the surface and exit from within the penetrated gypsum slurry 38, thus resulting in a smooth outer surface of the completed gypsum board when the manufacturing process is completed, as in aforementioned U.S. Pat. No. 4,477,300.

Completion of the smoothing operation of the slurry 44, resulting in an essentially planar combined bottom embedded sheet 14 and core slurry 44 is further facilitated by a forming plate in the top and bottom sheet joining station 80 (FIG. 1), disposed downstream, i.e., toward the right as seen in FIG. 1, of the deck vibrators 64, 68. The forming plate assembly of sheet joining station 80 operates in conjunction with a top embedded sheet 114 formed by the sheet coating station sub-assembly 110 having similar elements to those in the main production line that form the bottom-embedded sheet 14.

Top-embedded sheet 114 is comprised of a sheet or mat of randomly aligned mineral fibers, such as glass fibers, and is unrolled from a supply roll 112, similar to the supply roll 12. Similar elements to those used for the production of bottom embedded sheet 14 are identified by like numerals in the 100 series, utilizing the same two last digits as those identifying the like elements in the production of the bottom sheet 14. Supply roll 112 pays out a continuous top embedded sheet 114, which, in the completed gypsum board, will be adjacent the inner facing surface of the gypsum board product subsequently used in wall construction.

As shown in FIG. 1, the top embedded sheet 114 may require feeding through various loops around, for example, rollers 102, so as to avoid interference of the main production line by the operation of top sheet sub-assembly 110. Top sheet sub-assembly 110 directs the top embedded sheet 114 over a top sheet forming table 116 having an upwardly facing surface 118.

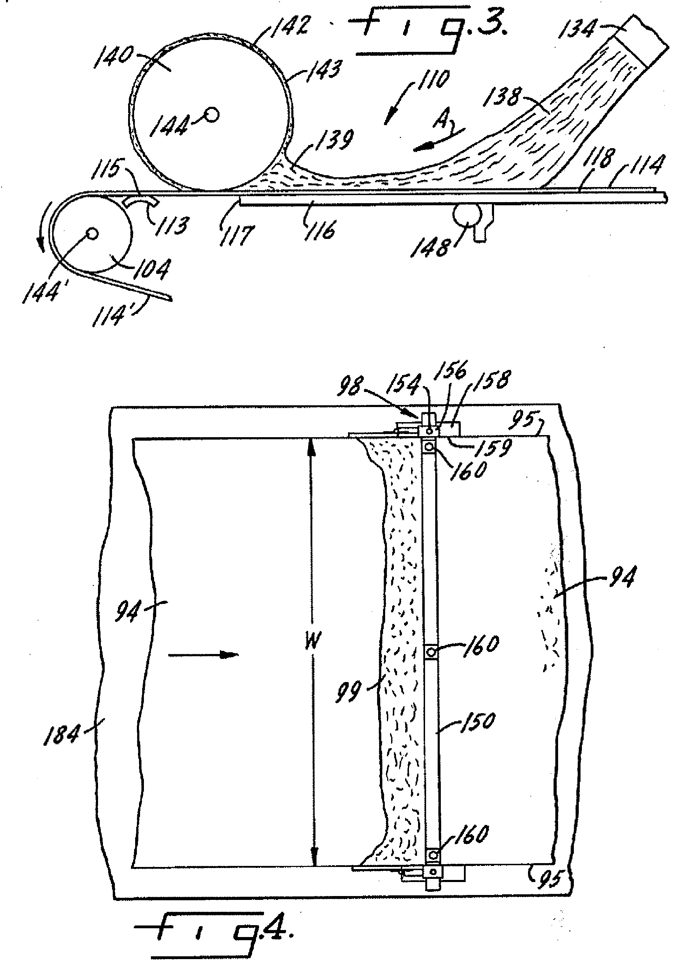

The continuous mixer 30 further comprises a slurry outlet 134 being controllable by a control device 136 providing a continuous stream of denser gypsum slurry 138 to the sub-assembly 110 for deposit onto the top embedded sheet 114, as shown. A detailed cross-sectional view of the top sheet production station portion of sub-assembly 110 is illustrated in FIG. 3, and reference is now jointly made to FIGS. 1 and 3. Although in FIG. 1, the preferred embodiment of two separate slurry controllers 36, 136 are shown for supplying two different slurry mixtures 38, 138, for respectively, the bottom embedded sheet 14 and the top sheet 114, it may be desirable to have one mixer discharge leading to dual controllers for controlling the discharge of two or more outlets, similar to that described in aforementioned U.S. Pat. No. 5,714,032. Alternatively, a single controller (not shown) may be used with the discharge outlets having individual valves enabling variable flow of gypsum slurry that is controllable for each outlet spout depending on the operational needs of the board production process.

Shown in FIG. 1, are separate controllers 36, 46, 136, each for controlling the output of a single outlet, i.e., dense gypsum slurry outlets 34, 134, or core slurry outlet 48. The configuration of the continuous mixer 30 provides separate mixing chambers, each attached to, and feeding gypsum slurry to, a separate outlet, which provides a specific type of gypsum slurry, as needed. Customization of the slurry provided to each of the outlets 34, 48, 134 thus enable a gypsum board line operator to provide different slurries, having desirable characteristics, to the location in the manufacturing line where needed. For example, an outlet, such as outlet 34, may be required to provide a denser gypsum slurry, such as slurry 38. The slurry may be desired to include specified additives, for example, a polymeric compound, which forms a matrix with the set gypsum after it sets, so as to provide a suitable surface for further finishing, as will be described below. However, if it is only necessary for the front facing surface to have such a surface, and using the embodiment shown in FIG. 1 provides the option to include the additive in only the dense gypsum slurry 38, pumped from controller 36, but not to include such an additive in the slurry 138, which will end up on the inner, back side of the gypsum board during construction. Alternatively, the gypsum slurry 138 is denser than the core slurry 44, and may have identical consistency as that of the slurry 38 coating the bottom embedded sheet 14.

Referring again to FIGS. 1 and 3 showing the top sheet slurry coating station 110, the dense gypsum 138 is deposited on the top embedded sheet 114, comprised of a mat of glass fibers, which is moving in the direction shown by arrow A, past the surface of the top sheet slurry table 116. The top sheet is moving essentially at the same rate as that of the bottom embedded sheet 14 traveling over forming table 16. The gypsum slurry 138 is denser than the core slurry 44, and may have an identical consistency as that of the slurry 38 coating the bottom-embedded sheet 14.

The top facing sheet slurry coating station 110 comprises a short forming plate 116, similar to the forming table 16, with the exception that the linear dimension of plate 116 is much shorter, having a sufficient length to achieve deposition of the gypsum slurry 138 and to spread out the slurry over the surface of the moving top embedded sheet 114 between the lateral edges of the continuous sheet 114. To assist in the process of spreading the gypsum slurry 138 over the surface of sheet 114, one or more pneumatic table vibrators, such as vibrator 148, may be included to vibrate the surface 118 of the table 116.

The mechanism for coating the top embedded sheet 114 is modified somewhat from that of the bottom embedded sheet 14 because the linear dimension taken up by the top sheet roll coater station 110 is reduced to a minimum. The linear dimension of the station 110 is reduced so as to accommodate disposition in the space directly above the main forming and working tables 16, 50, 56, 70. Such accommodation is seen, for example, in including two roll coaters horizontally displaced from each other so that the top embedded sheet 114 is coated by roll coater applicator wheel 140, and then pulled toward transition roll 104.

Applicator wheel 140, having a cylindrical surface 142, rotates about an axle 144, which axle 144 extends transversely to the direction of travel of the sheet 114. The vertical and horizontal disposition of axle 144 is important in obtaining the desired result of sheet 114 being fully impregnated with the dense slurry 138. As shown in FIG. 3, axle 144 is disposed linearly at a very short distance past the edge 117 of table 116. The axle is vertically disposed just slightly less than the radius of wheel 140 above the table surface 118 so that the applicator wheel 140 extends into the space under the plane defined by the table surface 118. As is shown in FIG. 3, during production the applicator wheel 140 puts downward pressure on top embedded sheet 114, which sheet is deflected some slight distance from its linear path followed across the table surface 118.

The dense gypsum slurry 138 being deposited on the moving top embedded sheet 114' produces a slurry concentration at a dam 139, comprised of excess dense slurry 138, which collects in the constricted space between the applicator wheel 140 and the top embedded sheet 114. The size of dam 139 can vary, depending on the desired characteristics of the resulting impregnated top embedded sheet 114' that is produced by the top sheet coating station 110. For example, if a greater degree of coating is desired to provide greater structural strength of the gypsum board, then the size of the dam 139 may be adjusted so that a greater amount of dense gypsum slurry is impregnated into the interstices between the mineral fibers of the mat comprising top embedded sheet 114. For purposes of distinction, top embedded sheet 114 is designated as impregnated top embedded sheet 114' after impregnation by the dense slurry 138.

The size of the dam may be adjusted by varying any of a number of different parameters of the materials and devices of the top sheet coating station 110. Among the variable parameters that can be adjusted that will affect both the size of the dam 139 and the degree of coating produced by the applicator wheel 140 are the linear speed of the moving top embedded sheet 114, the amount of dense gypsum slurry 138 deposited, the direction and speed of rotation of the applicator wheel 140, and the vertical and horizontal dispositions of the axle 144 relative to the table surface 118 and the edge 117, respectively. These adjustments may be utilized to produce the desired amount of dense slurry impregnated into the top embedded sheet 114, the amount of dense slurry 138 that penetrates through sheet 114 to coat the "bottom" surface of sheet 114, i.e., the surface closest to the table surface 118, and the weight of and rigidity resulting from the final impregnated top embedded sheet 114' produced at the top sheet coating station 110.

Working in conjunction with the applicator wheel 140 is downwardly curved transversely extending directional plate 113, upon which the sheet 114 impinges as it exits from contact with the applicator wheel 140. The directional plate 113 is preferably mounted so that the apex 115 is adjacent or within the plane defined by the surface 118. This positioning causes the sheet 114 to be placed into tension as the applicator wheel 140 pushes the sheet 114 downwardly from the plane, which disposition assists in the penetration of the gypsum slurry 138 through the mat of sheet 114. To inhibit the formation of slurry 138 on the surface 142 of applicator wheel 140, an appropriate thin film coating 143, comprising, polyethylene, or, for example, a Teflon^{®} coating, may be optionally disposed on the surface of wheel 140, similar to the coating 43 of roll coater 42 described above.

The top sheet 114', impregnated with the dense gypsum slurry 138, is directed from the applicator wheel 140 to a second roller wheel, the transition roller wheel 104, having an axle 144' that is parallel to axle 144. The transition roller wheel 104 is in the general path and in the plane defined by the surface 118, and its function is to change the direction of travel of the top embedded sheet 114' so as to render the top surface of the sheet to become the bottom surface, and vice versa. That is, the surface of the top embedded sheet 114 that was on the bottom, adjacent the surface 118, becomes the top surface and the sheet 114' is ready for delivery to and joining over the core slurry 44, as is described below.

Sheet joining station 80 comprises a circular pin 82 for receiving the impregnated top embedded sheet 114,' and a forming plate comprised of a first forming plate section 84, and a second forming plate section 86, joined to each other at an appropriate juncture 88, as shown. The forming plate is mounted directly above the primary board production line, to provide the function of joining the top embedded sheet 114' to the core slurry 44 disposed on the bottom embedded sheet 14.

Circular pin 82 extends laterally across the width of the top embedded sheet 114', which is directed from the transition roller wheel 104 so as to come into contact with the pin 82. Pin 82 is attached, either integrally or by an appropriate attachment mechanism, to the first forming plate section 84 so that there is a seamless transition experienced by the top embedded sheet 114' as it comes down from the top sheet coating station 110. Forming plate section 84 is disposed at an angle to the primary board production line and to the surface 72 of the forming table 70. The angle between forming plate section 84 and the surface 72 may be adjustable, may be provided with preset angular value so as to provide a constriction for retaining a slurry head 44' during the production process, as shown. This angular constriction operates in a similar way as that of the constriction between the applicator wheel 140 and the forming plate 116 to collect an excess of core slurry 44 and thus produce a slurry head 44' at the sheet joining station.

The slurry head 44' provides the function of collecting core slurry 44 at the head 44' that provides a continuous supply of slurry to fill in the gap between the top sheet 114' and bottom sheet 14, and assists in avoiding air gaps or voids in the final gypsum board between the two embedded surfaces. Once the faces are joined by the intervening core slurry 44, the top face sheet 114' has become inverted by transition roller wheel 104 so that its bottom surface, that which was immediately adjacent the surface 118 of forming table 116, has become the top surface 94 of the processed gypsum board, as shown.

The slurry head 44', because of the angular constriction between the forming plates, continually forces the slurry 44 to be injected into the constricted space adjacent the hinge 88, and so to create an additional pressure on the dense slurries 38, 138, impregnated into the top and bottom face sheets 14, 114', respectively, the pressure of the slurry head causes the core slurry 44' to more readily bond with both the dense slurries 38, 138 and also causes the dense slurries 38, 138 to further penetrate through the mats of the bottom and top face sheets 14, 114', thereby more thoroughly coating the outer surfaces of the finished gypsum board 94, 96.

To facilitate the constriction of the slurry head 44', the second forming plate section 86, extending from the hinge 88 toward the surface 72 of forming table 70, produces a very acute angle and one section 86 is almost parallel to the surface 72 of the table 70. The acute angle and the smooth surface of the plate sections 84, 86 produces an even smooth surface defining the top surface 94 of the gypsum board, with the overwhelming majority of the mineral fibers of the mat of top embedded sheet 114' covered by the dense slurry 138, and similarly the face surface 96 also essentially covered by the dense gypsum slurry 38.

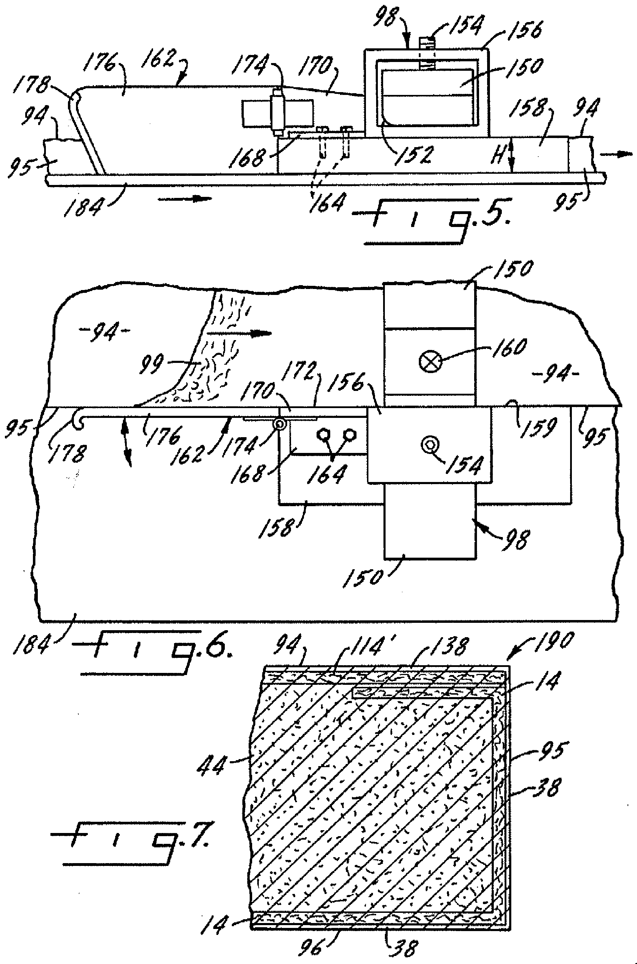

The final forming step in the board production is the edge formation of the two lateral edges of the board. The width of the bottom face sheet 14 upon which the core slurry has been evenly spread out is slightly larger, by about 2.5-5.0 cm. (one to two inches), than the width of the top face sheet 114. As the bottom face sheet 14 passes through the creaser wheel assembly 20, the creaser wheels 22, 22' crease the edges so that the width between the creases is the predetermined, desired width W (FIG. 4) of the final gypsum boards. The extra width of mat 14 extending beyond the creases for a distance about 2.5 cm (one inch) at either edge, is preferably turned up, and thus provides a border for containing the core slurry 44 which is extruded onto the top face sheet 14 between the creases. As the top face sheet 14 passes through the face sheet joining station 80, and at the lap point in the production line where the two face sheets 14, 114' are at or close to the desired separation essentially defining the thickness of the gypsum board, a mechanism at the sheet joining station (not shown) completes the inward folding of the creased portions and simultaneously deposits embedded sheet 114' over the folded edges to produce a formed board edge 95 (FIG. 7).

The creased edges of the bottom embedded sheet 14 are thus turned over and the top embedded sheet 114' is set into the inward folds of the bottom embedded sheet 14, thus completing the covering of the longitudinal edges of the gypsum board. Completely penetrated dense gypsum slurry at the lap point of sheets 14, 114' thus sets up and seals the edges 95 of the gypsum board product 190 (FIG. 7).

The gypsum board at this stage of production passes from the gypsum board forming station 10 toward the remainder of the finishing process that takes place on the belt line 180. To facilitate the passage of the gypsum board from the forming station 10 to the belt line 180, the forming table 70 includes a forming table extension plate 78 supported by the forming table 70, and extending from the edge of table 70 toward the surface of the belt line 180. It is important for maintaining the smoothness of the gypsum board surface 96 that the amount of vertically unsupported gypsum board is minimized when the gypsum is still in a wet state, effectively remaining as a slurry before setting. At the distal end of the board forming station 10, forming table 70 is adjacent the belt line 180 and the board passes from table 70 to belt line 180. Belt line 180 comprises at least one set of roller wheels, one roller wheel 182 which is shown in FIG. 1, with an endless belt 184 looped about the roller wheels 182 provide a means for motive power to transfer the sheets 114 and 114' and for removing the still wet gypsum board away from the board forming station 10.

The production of the gypsum board at the board forming station 10 is capable, as a result of the modifications described above to efficiently produce gypsum board at the rate of about 45 meters (150 feet) per minute or even higher rates. Accordingly, the rate of the moving belt 184 must match the speed of production, and the two rates are ideally coordinated so that increasing the production speed also increases the speed of the belt 184. As shown in FIG. 1, the edge of the forming table extension plate 78 is as close as possible to the beginning of the belt 184 so that the gypsum board passes from the forming table 70 to the belt line 180 sub-assembly without interference, all the time having vertical support of the gypsum board from the extension plate 78 and belt 184. To facilitate the transfer, the table deck 59 has a top-working surface that is essentially coplanar to the surface of belt 184.

To further improve the appearance and smoothness of the gypsum board back face 94, a first edger bar assembly 98 is disposed adjacent the gypsum board back face 94 and above the belt 184, at a point disposed further along the length of the board production line, as shown in FIG. 1. FIGS. 4, 5 and 6 illustrate in greater detail the first edger bar assembly 98, which provides an optional additional manufacturing operation for providing surface smoothing of the dense slurry layer 138.

The edger bar assembly 98 (FIGS. 4, 5 and 6) rides above the belt line 184 immediately adjacent the face 94. The edger bar assembly 98 is mounted in place to stabilize its horizontal position by an appropriate mounting mechanism such as a stabilizer mount. The assembly 98 comprises an edger bar 150 having a rounded front bottom edge 152, which is the leading edge that comes into contact with the gypsum board 94 passing below the edger bar 150. Edger bar 150 continually contacts the wet gypsum slurry face 94 to provide a trowel effect over the gypsum board surface so as to skim over any remaining uncovered areas to fill them in. The edger bar 150 may also create a small slurry dam 99, across the field of back face 94, as shown in FIG. 4, the size of which may be adjustable by adjusting the vertical separation between the bottom edge of the edger bar 150 and the surface of belt 184.

The vertical position of edger bar 150 is adjustable by means of mounting screws 154 which themselves are attached to two laterally disposed tubular clamping elements 156 for retaining the edger bar 150. As shown in FIG. 4, the length of edger bar 150 is longer than the width of the gypsum board surface 94, and the inboard edges of the clamping elements 156 are separated by a lateral dimension equal to the width W of the board. Optional pneumatic vibrators 160 are mounted within the edger bar 150 to assist in the gypsum slurry smoothing operation and to inhibit slurry buildup on the edger bar 150.

As described above, gypsum board and belt 184 are continually transported by the belt line 180 in the direction of the arrow, as shown. The edger bar clamping elements 156 are themselves mounted upon two laterally disposed edger shoes 158 that ride directly upon the upper most surface of the belt 184. The height of the edger shoes 158 above the belt 184 approximates the thickness of the gypsum board. The longitudinal edge 95 of the gypsum board is in continual contact with the board surfaces 159 of the edger shoes 158, the contact completing the forming of the surface at the longitudinal edge 95. As shown in FIG. 4, the edger bar 150 maintains a slurry head 99 that spreads out over the board surface 94, and which completes the forming of a smooth surface 94 in which exposure of glass fibers is minimized by the gypsum slurry coating.

An edge flapper mechanism 162 is also mounted onto the top of each edger shoe 158 by an appropriate attachment means, such as bolts 164. Bolts 164 attach one leg 168 of a stationary L-shaped mounting bracket (not shown in FIG. 1) to the top surface of the edger shoe 158, as shown. The other leg 170 of a mounting bracket may extend vertically from the horizontally extending leg 168 such that an inward facing surface 172 is coplanar with the inwardly facing surface 159 of edger shoe 158. The vertical extension of leg 170 is high enough above the board surface 94, so that the slurry head 99 forming thereon does not spill over the top of the edge flapper mechanism 162.

The vertically extending leg 170 includes a vertical spring hinge 174, that attaches an edge flapper 176 to the vertically extending leg 170, such that the edge flapper 176 is capable of rotating to a limited extent about the hinge 174, as shown by the double arrows in FIG. 5. The spring hinge 174 forces the edge flapper 176 to abut the longitudinal edge 95 of the gypsum board, the force of the spring hinge 174 being sufficient to retain contact between the edge flapper 176 and the board longitudinal edge 95 to counter the horizontally directed pressure of the slurry head 99. The edge flapper 176 has a rounded leading corner 178, which assists in the gathering of any slurry overflow so as to retain the gypsum slurry on the board surface 94.

During board manufacture, the edger bar 150 is displaced horizontally a very short distance from the rotating wheel 182 so as to absorb the sudden impact of any excess upwardly directed pressure on the edger bar 150, such as may arise from an anomaly in the board or during start up or shut down procedures. The belt line 180 provides some flexibility so that a sudden, slight upward or vertical pressure may be accommodated without disturbing the surface coating 94 of the gypsum board.

The edger bar 150 also produces an improved, smoother and denser gypsum layer on surface 94 than that which is produced by the first penetrated slurry coat 138 applied by the top roll coater sub-assembly 110. This denser coat arises from the tendency of the second slurry head 99 to continue the process of extruding entrained air bubbles from the wet slurry mixture.

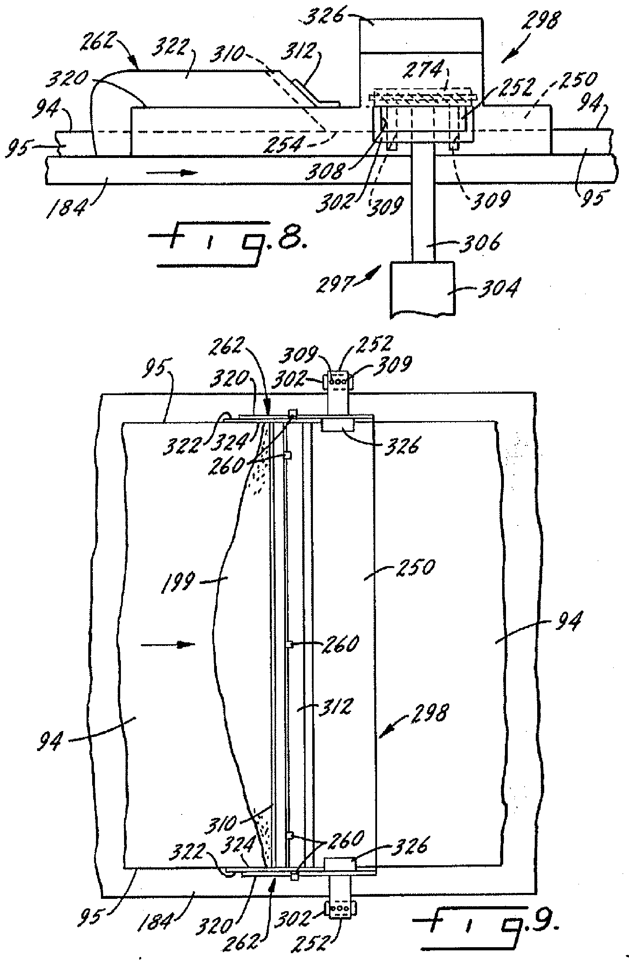

A second, and preferred, embodiment of the edger bar assembly 298 is illustrated in FIGS. 8-11. In many respects, the edger bar assembly 298 is similar to edger bar assembly 98. Assembly 298 also rides above the belt line 184 immediately adjacent the board face 94. The edger bar assembly 298 is mounted in place to stabilize its horizontal position by an appropriate mounting mechanism, such as stabilizer mounting device 297, as shown. The mounting device 297 comprises a mounting base 302, firmly attached to a stable position, for example , the ground or the underlying structure of the conveyor system 180. The stabilizer mounting device 297 may further include a lift piston 306 within the mounting base 304 for driving the mounting arm 302 in a vertical direction. Mounting arm 302 engages the edger bar mounting extensions 252 and can be electronically or otherwise controlled to change the vertical position of the edger bar, as will be explained below.

Similar to edger bar assembly 98, edger bar assembly 298 also includes an edger bar seat 306, upon which the remaining elements of edger bar assembly ride. Bar seat 306 includes an aperture 308, and two or more vertical secondary apertures 309 for providing orientation and stabilization for the edger bar.

Edger bar assembly 298 includes a modified edger bar 250 having edger bar mounting extensions 252 extending laterally from the edger bar 250 and in to the apertures 308, one at either lateral edge of the assembly 298. As is best seen in FIG. 9, the edger bar extensions 252 extend beyond the lateral edge of the conveyor belt 184, where they engage the stabilizer portions of the edger bar assembly 298. The vertical position of the edger bar assembly 298, and of the edger bar 250, and the separation between the edger bar 250 and the top surface of the conveyor belt 184 is controlled to maintain a desirable thickness of the gypsum plaster board 190.

The bottom skimming surface 254 of edger bar 250 continually contacts the wet gypsum slurry face 94 to provide a trowel effect over the gypsum board surface so as to skim over any remaining uncovered areas and thereby fill them in. The edger bar 250 may also create a small slurry dam 199 across the field of back face 94, as shown in FIG. 9, the size of which, by means of the stabilizer mounting device 297, may be adjustable by adjusting the vertical separation between the bottom surface of the edger bar 250 and the surface of belt 184.

To assist in maintaining a slurry dam 199 capable of providing a skimming effect to produce a smooth board surface 94, a forward angle, pre-forming plate 310 defines as a leading edge of the edger bar 250. The forward angle, pre-forming plate 310 provides the function of blocking and directing excess gypsum slurry to the head 199, thereby creating a ready source of the gypsum slurry, as shown in FIG. 9, which head 199 provides the gypsum slurry for filling any remaining voids on the surface, and for smoothing out the surface 94 of GRG board.

Forward angle, pre-forming plate 310 defines an acute angle relative to the surface 94 which is capable of gathering the gypsum slurry that is skimmed off the gypsum board surface 94 and redirecting it to be reformed on to the desirable smooth surface. A preferred value for this angle is between about 30°- 60°, with a most preferred value being about 45°. The forward angle, pre-forming plate 310 may have a backing plate 312, also having two sections defining a similar acute angle. Backing plate 312 provides a supporting structure for the forward angle, pre-forming plate 310.

The pre-forming forward angle plate 310 of the edger bar 250 is preferably integrally formed with the edger bar itself, or alternatively, may be attached thereon by appropriate means (not shown). It is important, however, that the transition from the bottom surface of the pre-forming forward angle plate 310 to the forming surface 254 of the edger bar 250 should be smooth and without impediments to the even coating of the gypsum slurry over the surface 94. Although shown in phantom in FIG. 8 as a sharp angled juncture, a round smoother transition between the pre-forming plate 310 and surface 254 may be preferable. The longitudinal width of the edger bar 250 has a length in contact with surface 94 that is longer, in the direction of travel of the gypsum board having a length of about 20 cm (8 inches). This longer length results in a longer smoothing contact of the edger bar 250 with the surface 94.

To provide a smoother, non-stick surface 254, it may further comprise a Teflon^{®} coating on the underside of the second forming plate defined by the under surface of edger bar 250. Alternatively, the entire edger bar 250 may comprise a non-stick material such as Teflon^{®}.

To provide increased capability of smoothing and completion of the desired geometrical configuration during formation of the gypsum board lateral edges 95, an edge flapper subassembly 262 is amounted to operate together with edger bar 250, as is described below.

Optional pneumatic vibrators 260 are preferably mounted within the edger bar assembly 298, preferably on the pre-forming forward angle plate 310, to assist in the gypsum slurry smoothing operation and on the flapper edger sub assembly 262 to inhibit slurry buildup on the edger bar 250.

As described above, gypsum board and belt 184 are continually transported by the belt line 180 in the direction of the arrow, as shown in FIG. 9. However, a significant difference in this embodiment (FIGS. 8-11) is that the edger bar assembly 298 does not ride on the surface of the belt 184, but has a height relative to that surface that is independently controlled by the mounting device 297, as described above. As shown in FIG. 9, the edger bar 250 maintains a slurry head 199 that spreads out over the board surface 94, and which completes the forming of a smooth surface 94 in which exposure of individual glass fibers is minimized by the gypsum slurry layer.

Edger bar assembly 298 further includes an edger flapper mechanism that is mounted onto the edger bar 250 by an appropriate attachment means, may engage both the edger bar extensions 252 and through appropriate apertures 308, which may be threaded, in the mounting arm 302. The attachment of the edger bar assembly 298 to the mounting stabilizer device 297 through mounting base 302 provides for a unitary edging mechanism that creates a smooth surface 94 and simultaneously provides a smooth gypsum layer on the edges 95 of the gypsum board.

Another difference with the edger bar assembly 98 is the omission of edge shoes. Instead, the edger bar assembly 298 includes disposing the Teflon^{®} flaps 320 at opposite ends of the edger bar 250, comprising a dimension in the range of from about 15 cm (6 inches) to about 180 cm (72 inches). The Teflon^{®} flaps 320 are disposed abutting the edge 95 of the gypsum board so as to form it in a squared or other geometrical figured edge. A Teflon^{®} material is preferred to provide a smooth surface that will not interfere with the continuous passage of the gypsum board in the direction of the arrow as shown in FIG. 9.

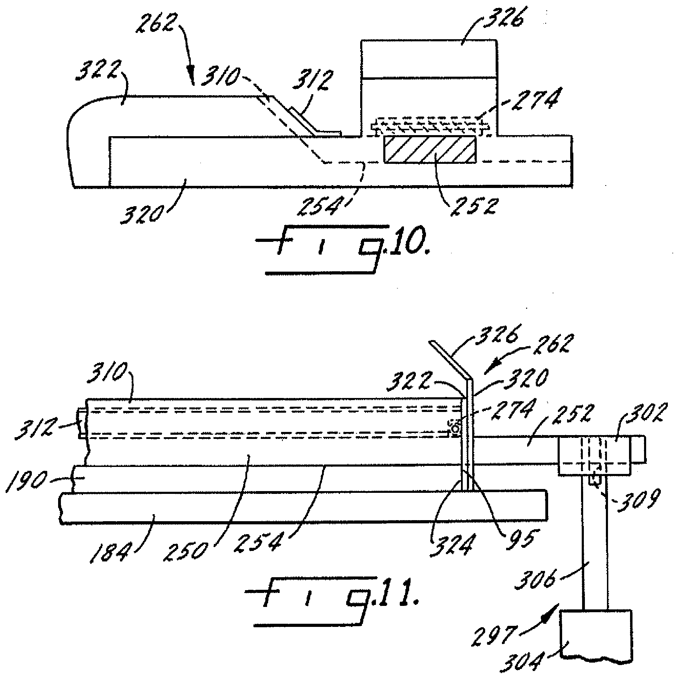

To further inhibit the excess formation of gypsum slurry on the surface of board edge 95, an edge flapper mechanism 262 is disposed to work in conjunction with the Teflon^{®} flaps and the edger bar 250. The edge flapper mechanism 262 (FIGS. 10 and 11) also provides a means for retaining the slurry head 199 from over flowing over the gypsum board edges 95 during production, and inhibits formation of gypsum slurry patches on the moving belt 184.

The edge flapper mechanism 262 is disposed on the edger bar 250, and attached thereto by an appropriate means for example, as described above relative to the edger bar assembly 98 (FIGS. 4-6). Referring now to FIGS. 10 and 11, one flapper 322 is disposed over the flaps 320, and can pivot relative thereto as a result of a pivotal spring hinge 274, which attaches the flapper 322 to the edger bar 250. As in the edge flapper 162, the spring hinge 274 provides a tensional force to abut the edge flapper 322 against surface 95 rotationally about the spring hinge 274, the spring hinge 274 providing sufficient force to retain contact between an inner surface 324 of the edge flapper 322 and the gypsum board longitudinal edge 95. The force of spring hinge 274 counters the horizontally directed pressure of the slurry head 199. The edge flapper 322 may include a compression activated lifting lever 326, which assists in forcing the flappers 322 to rotate upwardly when the assembly 298 is raised away from surface 94. The specific arrangement of the edger bar assembly 298 disposes the edge flapper mechanism 262 directly against the longitudinal edge 95 of the gypsum board. However, the configuration differs from that of edger bar assembly 98 in that the edger bar extension 252 extends away from the edge flapper mechanism 262 so as to remove and somewhat isolate the extension and elevational controls 297 from the edge flapper mechanism 262. This configuration does not impact greatly on the operational efficiency of the edge flapper 322 or the edger bar 250, which provides similar functions to that of the edger bar assembly 98 in a similar way, but the configuration tends to maintain the pneumatic devices free and clear of gypsum slurry so as to avoid problems with the operations thereof.

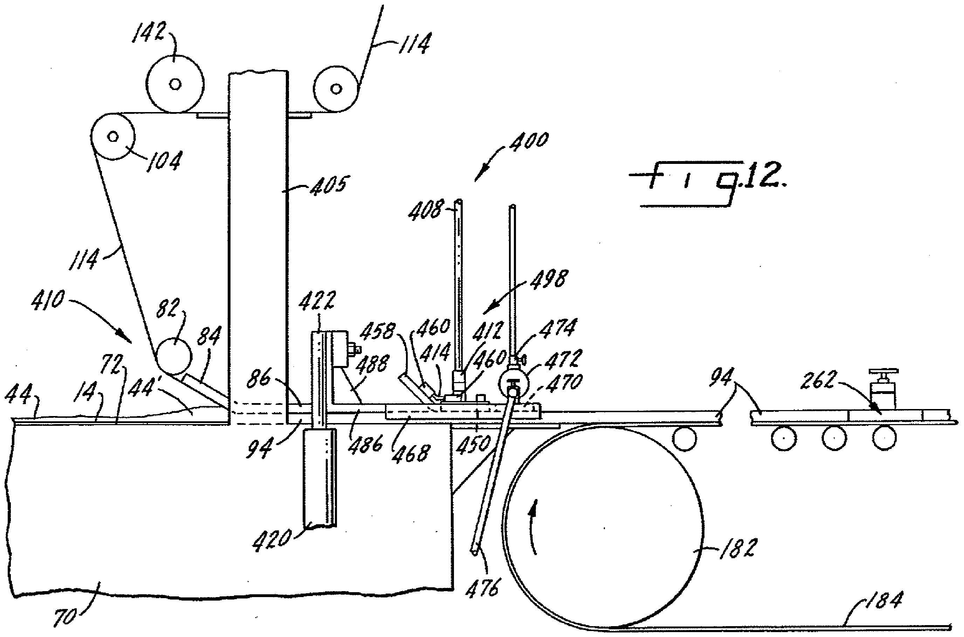

Referring now to FIGS. 12-14, yet another embodiment of the edger bar mechanism is illustrated, shown disposed downstream of the gypsum board manufacturing station. The equipment and process for the manufacture of the gypsum board itself, prior to the final edge finishing steps, is generally identical to that of the previous embodiments, and will not be described in great detail herein. Thus, identical or like elements will be designated with the same reference numerals and different reference numerals will designate those unique portions of this embodiment.

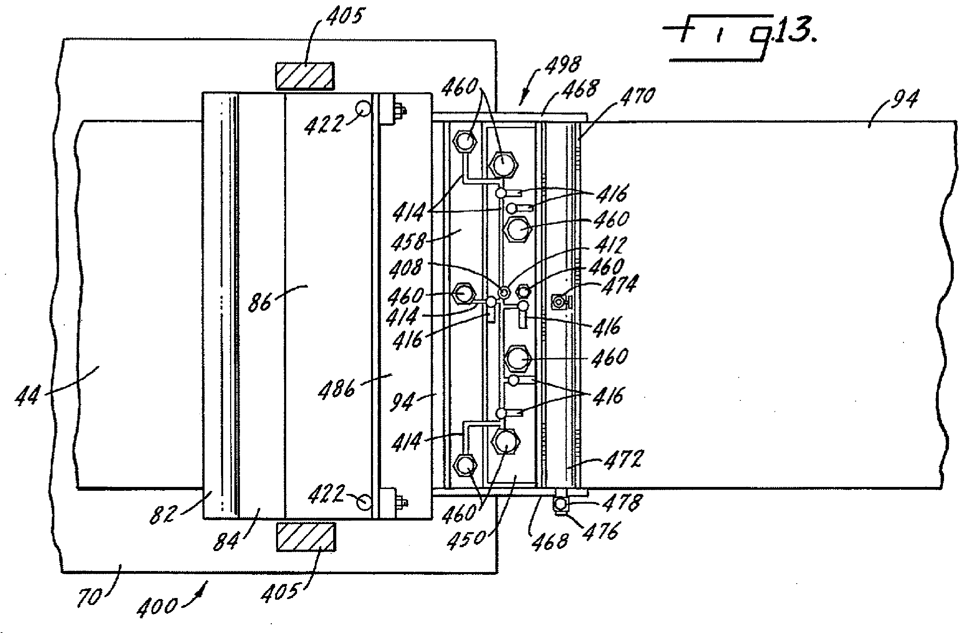

FIG. 12 illustrates a diagrammatic or schematic elevational view and FIG. 13 illustrates a top diagrammatical view of the gypsum board production and transportation line, designated generally as 400. The gypsum board production includes a bottom embedded sheet 14 and a top embedded sheet 114, with the slurry 44 being disposed between the two sheets of randomly aligned inorganic fiber material. The apparatus includes pin 82 and forming plate sections 84, 86, for producing a gypsum board 94 having a desired thickness. A post 405 is shown for mounting the top sheet delivery system 410, including a mount for the mat roll 112 (FIG. 1). The forming table 70 provides the working surface for gypsum board manufacture.

As shown in FIGS. 12 and 13, additional extensions 486 of the forming plate 86 are shown, supported by a forming plate support 488. The forming plates 86, 486 and support 488 comprise a leading edge portion of a back skim coater assembly 498, connected together and being transposable in a vertical direction, and the transposition of assembly 498 being controlled by a forming plate lifting system 420 transpose the assembly vertically along post 405. Lifting system 420 preferably includes an actuator 422, either electromechanical or hydraulic, for adjusting the height of the forming plate support 488, and forming plates 86, 486, from the surface 72 of the forming table 70, to obtain the desired gypsum board thickness. The lifting system 420 may also lift eh forming plate assembly 498 to a remote location spaced from the board 94, during times when the production line is down, so as to provide easy access to the equipment for adjustment, repair or cleaning.

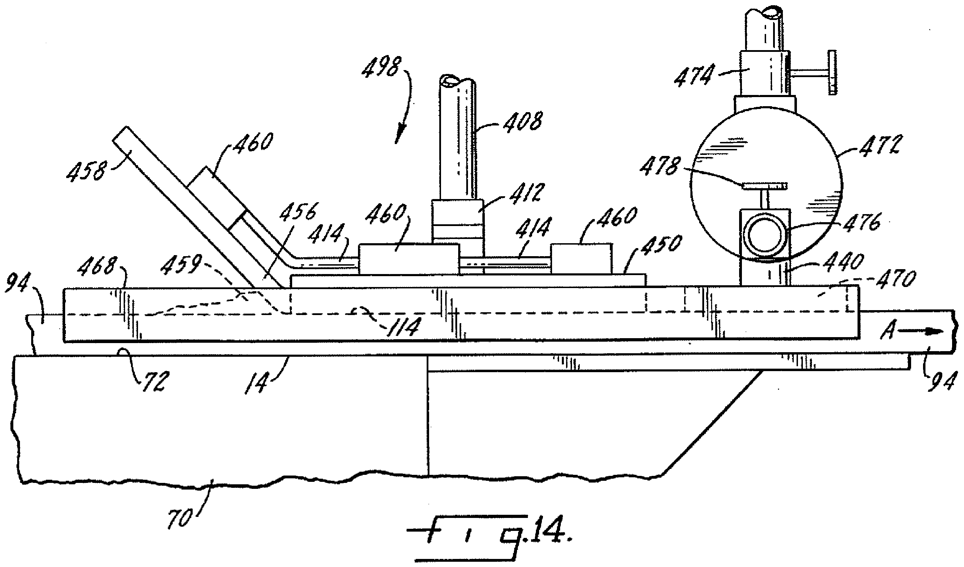

As in previously described embodiments, the back skim coater assembly 498, sometimes referred to herein as the forming plate assembly shown in greater detail in FIG. 14, includes a slurry inlet lip 458 for guiding and redirecting any excess slurry buildup 459, which may include rehydrated water that is exuded by the gypsum as it sets up in the exothermic gypsum reaction for forming the set gypsum, as described above. Forming plates or a gypsum contacting vibrating contact member, also refereed to herein as a contact forming plate 450, provides the smoothing function to provide as smooth a surface as is desirable on the gypsum board surface.

The back skim coater assembly 498 is maintained in a stationary or fixed raised position by the forming plate lifting system 420. During operation, the assembly 498 is lowered to a suitable height so that the forming plate contact surface continually contacts the moving dense gypsum surface layer 114 of the board 94. The height is suitable to form the board 94 to a desired thickness, and the weight or pressure exerted by the contact forming plate 450 is sufficient for formation of the board surfaces 14 and 114, and should also be sufficient to exert enough applied pressure so as to produce a volumetric unset gypsum slurry head 459, as shown in FIG. 14.

It is advantageous and preferable that the water film is provided over the surface of the gypsum board at the point in the gypsum board formation process known in the gypsum board industry as the initial set or stiffening point. At this point, there is a measure of control that can be provided over the board setting process by introducing formulation additives to increase or decrease the speed of recrystallization of the gypsum from solution or slurry form.

Pressure is continuously exerted on the gypsum board surface, moving in the direction of the arrow A, and is applied at the internal low side 456 of the slurry guide inlet lip 458. As the forming plate assembly 498 is deposited upon the top surface of the board 94 so as to support the weight thereof, the assembly 498 should be free to self adjust in the vertical direction, and the weight thereof should be equally distributed across the width of the board 94 so that the contact forming plate 450 provides a uniformly even surface pressure on the gypsum board 94, thereby producing a board of uniformly even thickness. The angle of incidence of the contact forming plate 450 relative to the surface of the moving board may be variable or fixed, as desired, in a range of from about 25° to about 90°.

Alternate methods of providing the smoothing section may be provided. For example, the inlet slurry lip may be modified into any of a number of different shapes, such as convex or bullet nose shapes, which produce a scooping and flattening effect on the surface of the board. Another modification to the slurry inlet lip may be to provide a concave depression (not shown) so that the slurry can be collected in a transversely central portion of the back skim coater assembly and be added to the center of the moving board, or have a convex surface to direct the excess slurry toward the edges, as desired. Orientation of the inlet slurry lip relative to the board moving direction may also be altered, for example, by a diagonal orientation.

Alternatively, rather than a slurry inlet lip 458, one or a set of roll coater wheels (not shown) may be used for the back skim coater to initially evenly smooth the surface before the board is further finished by the fluid bed, as is further described below. The roll coater(s) may be mechanically or electromechanically driven in either a forward or backward rotation, and may be fixed or adjustable to provide a final surface and thickness dimension to the board.

The back skim coater assembly 498 further includes a transversely extending vibrating contact member 450, which may comprise a smooth metal or composite material capable of producing a smooth gypsum surface. To provide a catalyst for production of a smoother surface, the various members of the back skim coater assembly 498, for example, the slurry inlet lip 458 and the contact member 450, each have one or more associated pneumatic vibrators 460. The vibrators 460 are typically arranged across the width of the back skim coater assembly 498, as shown.

The vibrators 460 are preferably driven by a pneumatic or air driven means, the pressurized air being supplied from an outside source, such as a pump (not shown), through an air supply line 408 to an air supply manifold coupling 412, that in turn feeds each of the vibrators 460 through feed lines 414. The rate of vibration of each vibrator 460 is controlled by a vibrator air flow control valve 416 disposed in-line in the feed path between each vibrator 460 and the manifold coupling 412.

The vibrators 460 are generally activated as the main contact forming plate 450 reaches its working height, and the vibration oscillation speed of the vibrators 460 is controlled by the adjustment of valves 416 to a rate suitable to prevent excessive build up in the slurry head 459 and also eliminate large air pockets that may have remained in the dense gypsum surface layers 14, 114 of the gypsum board 94. Additional vibrational pressure is also provided for the as yet unset gypsum to penetrate into the interstices between the fibers and completely cover the outer surfaces of the board 94 with the dense gypsum.

The slurry inlet lip 458, the contact forming plate 450, the forming plate 86, and the forming plate extension 486 may comprise any of a number of hard or hardened durable materials, for example, metal, ceramic, composite materials, or durable plastic. The slurry inlet lip 458 and the contact forming plate 450 preferably each include a gypsum contacting surface that is polished or has a chrome coating, if metallic, ceramic or composite materials are used, so as to inhibit adhesion of the slurry buildup to the forming surfaces of the plates, which can quickly build up because the adhesion of slurry on the surfaces may provide a surface for additional buildup. Thus, a slick or very smooth contact surface is desirable for each of the gypsum forming members so as to permit all of the unset gypsum to be processed in the gypsum board without setting up on the contact surfaces. Alternatively, the slurry inlet lip 458 and the contact forming plate may have contact surfaces coated with a non-stick coating, for example, a Teflon^{®}, Vinyl^{®} or Nylon^{®} polyamide, poly (hexamethylene adipamide) surface coating (not shown), to prevent surface adhesion of the unset gypsum slurry. The contact surfaces of the contact forming plate 450 may be smooth or contoured, or have an edge design, in the machine line-parallel or transverse directions, to provide desirable gypsum surface or edge effects, as otherwise described with reference to other embodiments herein.

As with the other embodiments described above, the contact forming plate 450 and other elements of the contact forming plate assembly 498, are supported by mounting elements, including the forming plate support 488, that provide the structural framework for the lifting system 420 to position and orient the back skim coater assembly 498 relative to the quickly moving gypsum board 94 so as to provide the desirable surface treatment to the gypsum board 94.

In addition, each longitudinal edge of the gypsum board is also shaped by two end shoes 468, shown in FIG. 12, for forming and smoothing the edges of the board 94, that also are preferably mounted on the contact forming plate assembly 498. The end shoes 468 are not shown or described here in great detail, but may provide the functions as discussed with reference to other embodiments, such as providing a sharp edge, or for turning over the dense slurry layer to provide a glass mat protected edge as described with regard to the longitudinal edge walls 95 of the gypsum board embodiment illustrated in FIGS. 7A-7C. The end shoes 468 further contain the unset slurry within the confines of the back skim coater assembly 498 and on the top surface of the gypsum board 94, thereby avoiding leakage of gypsum slurry over the forming belt 184. The end shoes, 468, also referenced to as end flappers with respect of other embodiments above, may also include one or more vibrators (not shown) so as to inhibit gypsum slurry build up on the contact surfaces.

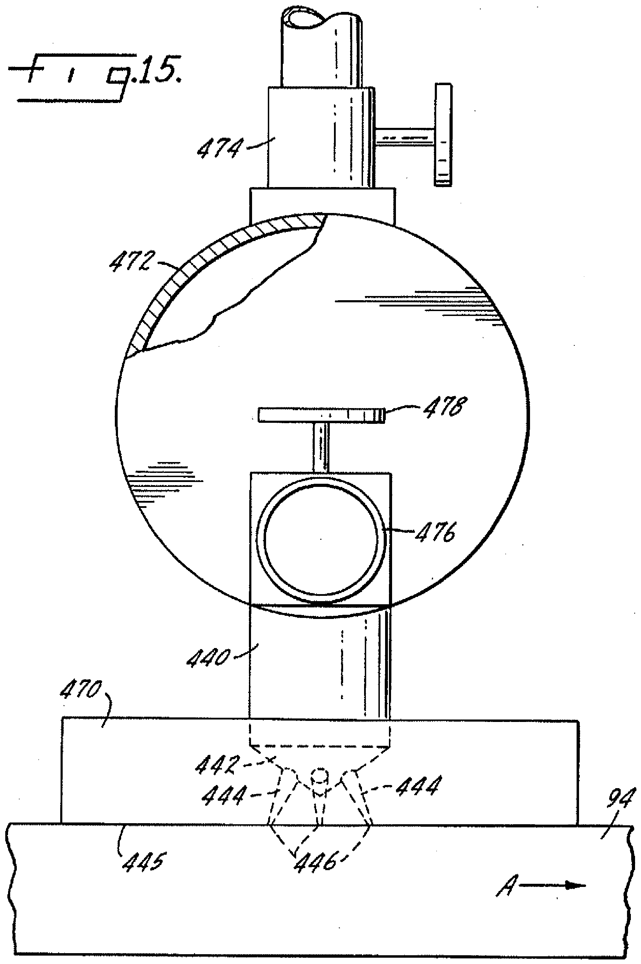

Further smoothing of the top surface layer 114 of the dense slurry to achieve a very smooth front surface of the gypsum board 94 may be provided by a microporous fluid bed contact plate member 470 for providing pressurized water so as to produce a continuous film of water over the top surface of the gypsum board 94. Now referring to FIGS. 12-15, the microporous fluid bed provides a fluid film, as will be explained below, by using a pressurized water manifold 472 having a fluid bed manifold control valve 474 for controlling the amount and pressure of fluid flowing into fluid bed micropore structure, which is shown in greater detail in FIG. 15. The pressurized fluid from the manifold is dispersed to the microporous fluid bed contact plate member 470 through manifold piping, described in greater detail below. A manifold discharge 476 with a valve 478 may be utilized to depressurize or b drain the fluid from the manifold 472.

As is shown in FIG. 15, there is illustrated detailed cutaway elevational views of the manifold 472 and microporous fluid bed structure 470. The fluid bed manifold 472 includes a plurality of supply pipes 440 that distribute pressurized fluid from the inlet source and the pressurized fluid manifold 472 to a plurality of fluid bed micropore outlet branch members 442, which further comprise a plurality of micropores 444, (shown in phantom) that distribute the pressurized fluid through apertures 446 onto the surface of the gypsum board 94. The surface 94 continues to be in contact, with a fluid bed contact forming plate member 470, that continues the smoothing and shaping process, or alternatively, is an extension (not shown) of the contact forming plate 450. The fluid bed contact surface 445 provides the smoothing function of the plate 470, and the surface may also comprise a polished or chrome coating or other non-stick material. Ideally, the transverse dimension of the skim coating surface of the forming plate member 470 is wide enough to accommodate boards of any size, but can be adjustable to produce board shaving a width between 6 inches (15.24 cm) and about 54 inches (137.2 cm).

The surface 445 may comprise a smooth place or contoured surface having a plurality of the micropore apertures 446 through which the pressurized fluid is dispensed over the surface of the gypsum board 94. The micropore apertures 446 are preferably evenly spaced from each other and extend across the width of the micropore contact forming plate 470 to evenly distribute a film of fluid over the surface.

It is a feature of this invention that the moving water film, in conjunction with the contact pressure exerted from the contact surface of the skim coater assembly acts as a trowel mechanism that levels and smoothes the gypsum board surface resulting in a finished gypsum board 94 that has a well finished, almost glossy appearance. A finish of this level of smoothness is typically applied by hand using manual labor to apply a skim coating gypsum compound to a paper faced gypsum board after said paper faced gypsum board has been installed to a wall assembly, and is referred to in the industry as a level 5 finish. It is a highly desirable surface feature that offers a non-blemished smooth wall appearance for normal priming and painting. In this invention, and for use on said enhanced glass reinforced gypsum board manufacturing, as the gypsum surface is modified with an entrained polymer compound, because the surface is of level 5 finish smoothness, there is no need for the priming step prior to painting as the entrained polymer also acts to serve the intended purpose of the standard priming step during a paint finishing procedure. For example, such a surface may be directly painted thereon, without need of a primer or other prefinishing step.

The micropores 444 are essentially in the shape of cones (shown in phantom) having their apex at the surface 445, and ending with the apertures 446, so as to continually bleed a stream of fluid into the space between forming surface 445 and the top surface of the gypsum board 94. Strategic placement of the apertures 446 relative to transverse extension of the contact surface 445 of the fluid bed micropore member 470 will provide a film of fluid that extends across the complete width of the board 94 between the edges 95.

The fluid film is provided over the surface of the gypsum board at precisely the point in the gypsum formation process known in the gypsum board industry as the initial set or stiffening point. The fluid moves transversely across the dense gypsum layer on the top surface of the gypsum board 94 at the point where the gypsum is initially setting up and forming the surface of the dense gypsum layer, just as the rehydration reaction is commencing. At this stage, gypsum begins to lose its fluid character and begins to be workable, as in other industrial cementitious compounds. The gypsum is not yet at a final setting stage where rehydration is complete, but is still plastic enough to control formation and to begin the formation of a final surface layer.

As the gypsum board continues to be transposed along the gypsum formation line, the rehydration reaction proceeds and as it is an exothermic reaction, it gives off heat and also water as a by-product. This water, together with the film of fluid provided by the microporous fluid bed 470, adds to the plastic nature of the dense gypsum layer on the board surface. The gypsum continues to stiffen as it is rehydrated, and the smooth contact surface 445 subjects the top surface of the gypsum board 94 to a further smoothing action over the top most dense slurry gypsum layer. The smoothing action occurs not only due to the contact of the surface 445, but also because the fluid film at the interface between gypsum board surface 114 and contact surface 445 provides a re-fluxing capability to the gypsum at the interface. This process aids in providing an additional level of finishing to a smooth, level five (5) appearance. It also aids in further providing a denser layer of gypsum at the surface, since as the fluid evaporates, it leaves behind the gypsum in a set up state with the fluid removed.

The surface 445 of the microporous fluid bed is capable of producing a smooth or contoured troweled contact surface, in both the gypsum line direction and the transverse direction. This surface action completes the formation step of the gypsum layer.

Similarly, micropores (not shown) may also be provided in the edger shoe 158 for providing water and possibly polymers to the longitudinal edges 95 to aid in forming the tongue and groove shapes therein.

The remaining process steps for completing processing of the gypsum board are considered essentially standard and are not described in detail herein. The belt line 180 removes the production gypsum board from the board production station 110, at the rate of 45 meters (150 feet) per minute, or even higher. The amount of time that is necessary for gypsum to set in a hydration process is known, and because the board must be supported by a horizontally extending surface during initial hydration, it cannot be removed from the belt line 180 or from some other horizontal supporting mechanism. Previous production rates of gypsum board produced by prior art processes were significantly slower than that produced by the present inventive production process. Consequently, the speed of the belt line was much slower.

To accommodate the significantly faster production rate of the present inventive process, the belt line 180 must be significantly longer than for the prior art production line, perhaps extending for over 180 meters (600 feet) or more. The actual rate of hydration is dependent on ambient conditions, such as temperature, humidity, gypsum consistency, etc. If necessary, the rate of production and speed of the belt line 180 may be modified to take into account those conditions to achieve complete hydration prior to the subsequent production steps.

Following the hydration step, the gypsum board is cut to desired lengths to produce gypsum board segments which are then turned over by turner arms and replaced onto transfer belts. Spray coating or painting of the top surface of the boards, after they are turned over, is appropriate at this stage. The boards are then transferred by a roller table (not shown) into a dryer, which process essentially may be performed by standard or known board drying procedures. The hydration process results in separating the water, which is in solution with the gypsum in the set slurry state, and further hardens to completely set the gypsum in the final gypsum board product, and the drying process removes the resulting water.

The drying process removes the water from the hydrated wet gypsum by means of passing the gypsum board segments through one or more dryer sections that vary the temperature through a number of different settings. It has been found that use of mineral fibers, such as glass fibers, for the backing mat in the front and back faces permits lower temperatures to be used, and the lower temperatures, together with the absence of standard paper backing in the gypsum board, reduces the amount of drying energy needed for this portion of the process.

Final board finishing steps are also eliminated by the inventive process, which steps are presently performed in standard paper-faced gypsum board production. For example, the creasing wheels of the present inventive production line consistently produce a gypsum board having a desired width when the creases are folded over the joined top and bottom sheets, as explained above. Thus the need to saw the board's longitudinal edges to provide a consistent width of the gypsum board segments is eliminated.

Additional benefits derive from use of the inventive gypsum board production. The production line, as configured, can be quickly and easily converted from production of paper board to that of glass reinforced gypsum board, and vice versa, thus reducing retooling expenses and downtime during conversion from one to another production mode. This can be done without stopping the production line. The higher line speed allowed by the inventive production process reduces the overall costs of manufacturing by reducing the fixed costs relative to gypsum board output, thereby increasing marginal profits.

The process utilizes a denser gypsum mixture for the front and the back and the lateral end surfaces to provide structural strength and a lighter, lower density core, which results in an overall reduction in the weight of the board, as well as a reduction in the marginal manufacturing costs. Delivery costs can also be reduced without exceeding maximum transport weight limits set by governmental regulatory agencies. Handling at a construction site is much easier, since no uncovered glass-fibers are exposed that may penetrate the skin of the workers using the board and thereby inhibits worker's physical discomfort. Another structural benefit results from the ability of forming the edges without cutting, again eliminating exposed glass fibers and further strengthening the structural integrity of the final gypsum board segments.

An additional benefit and improved performance characteristics derive from the ability to include additives into one or more of gypsum slurries 38,44, 138. For example, if an improvement in the water-resistance of the front face or back face surfaces of the board is desired, an additive, such as a polymeric compound, may be included in the mixture of constituents input directly into the controller 36 and/or 136. Such additives may be selected to provide any of a number of desired characteristics, such as water resistance, structural strength, ability to provide an applied finishing system substrate for further finishing of the front face, including attachment of finishing elements thereto, for example, stucco wall-covering, etc.

It has been found and it is a feature of this invention that addition of a specific group of polymer additives, when mixed into the dense slurry 38, provides a number of the characteristics that provide the defined advantages. The solid polymeric compounds are dissolved in water in almost any desirable proportion, but preferable is a solution of about a 45% polymeric solids content diluted in water. In a preferred embodiment, the polymeric solution is pumped to the predetermined controller(s), for example controllers 36, 136, and added to the mixture of dense slurry 38, 138 mixed in each chamber of mixer 30. The dense slurry controllers 36, 136 then supply the dense slurry 38, 138 through outlets 34, 134 directly to the applicator roll coater wheels 22, 22' as needed, to provide an increased physical surface strength to the completed gypsum board, so as to significantly exceed standard board specifications.

Ideally, the polymer additive in the gypsum slurry solution enhances the bonding strength also between the core slurry 44 and the outer surface dense slurries 38, 138 and between the dense slurry that extends across and through the mats of the glass fiber embedded sheets 14 and 114'. The polymer is thought to generate a polymer matrix comprising essentially physical connections resulting from the long polymer chains. The polymer matrix essentially extends from the junction of the lower density core slurry and into the dense slurry layers 38, 138, which have penetrated through the sheets 14, 114, and to extend to the surface of the gypsum board. The polymer matrix is effectively embedded within the gypsum base and provides a coalescing surface upon which further finishing can be based, for example, painting or a water impervious acrylic cover, that may be added at this stage of the finishing process, for example, by spray coating.

The surface texture of the front face of the completed gypsum board includes the polymer, which, as a part of the underlying matrix, presents a smooth dense layer of gypsum to which other polymeric, e.g., acrylic, compounds can adhere. As the polymer layer cures, for example, in the drying process, it hardens to provide a stiff surface capable of retaining a load. The surface having the polymer additive, reduces chalking, improves water resistance and provides specific sites for chemical adhesion by other polymers. The composition of a water resistant or impervious coating can comprise one or a combination of the following polymeric compounds: polyacrylamide, polymethylacrylamide, polyvinyidene chloride (PVDC), Nylon^{®}, polyvinylchloride (PVC), polyethylene, cellulose acetate, Buna^{®} Rubber, polycarbonate, polypropylene, polystyrene, styrene, butadiene, styrene butadiene copolymer, Neoprene^{®}, Teflon^{®}, natural rubber, poly (2,6 dimethyl pentene oxide), poly 4, methyl pentene-1 and polydimethyl siloxane.

Before the drying step, when the gypsum board has not yet been cured, an optional acrylic coating step may be performed at an appropriate point in the production line. The acrylic application step may include application of an acrylic coating, by flood coating or other appropriate means, over the uncured polymer layer. The characteristics of the acrylic polymer tend to generate chemical bonds directly between the acrylic coating and the latex polymer additive embedded in the gypsum board surface. Alternatively, the acrylic coating may be applied after cutting of the gypsum board into the final board product lengths, and after the board segments are turned over to receive the acrylic coating.

The acrylic coating ideally keys into the surface layer, creating a temporary mechanical bond on the front face. Subsequent drying and curing of the gypsum board surface in a conventional dryer, including the acrylic coating, generates a chemical bond between the polymer matrix and the acrylic front face coating. The copolymeric chemical bond thus formed inhibits water absorption by the GRG board product, and further inhibits peeling of the surface layers of the gypsum board during subsequent handling of the board and during subsequent weathering of the board during its use in construction.

Preferably, the polymer additive which has been noted as producing the desired characteristics comprises one or more polymer taken from a group consisting of acrylic, styrene, butadiene, latex, or polyvinyl acetate polymers and copolymers that are dissoluble in water, such as those listed above. The delivery of the polymer in solution may be targeted into the complete slurry mix, including dense and core slurries, or may provide a targeted delivery to the dense slurry controllers, either 36 or both 36 and 136, or may even be directly targeted into the outlet 34 which delivers dense slurry 38 to the front face sheet 14. Addition of polymer, especially at strong concentrations, may affect the fluidity of the gypsum slurry, and thus, additional water and or a retarder may be necessary for use with the polymer additive, or later in the processing as needed, for example, after the slurry/polymer combination has been mixed.

Preferably, the polymer is in solution with the water and can be in a range of from about 1% to about 99% solution, but a preferable range is from about 40% to 50% polymer, and most preferably is about 45% polymer by weight. Preferably, the polymer solution is pumped into the controllers for delivering gypsum slurry to the front and back face sheets 14, 114' at a supply rate between about 190 cm³ (0.05 gallons) per minute to about 0.019 m³ (5.0 gallons) per minute and a preferred rate of between 379 cm³ (0.1 gallons) to 0.004 m³ (1.0 gallons) per minute. The actual delivery rate may vary depending on the speed of the board production line and other manufacturing considerations.

The surface coating is preferably applied to the front board face directly onto the smooth or textured surface at a rate that results in a thickness in the final gypsum board product, also referred to as the dry coverage thickness, in a range from about 0.5 mils. to about 4.0 mils. The application rate measured by weight of the wet acrylic solution per unit area of the board surface covered can be in a range of from 0.0054 grams/ cm² (0.18 oz. per square foot (oz./sf)) to about 0.045 grams/cm² (1.45 ozs./sf). Ideally, the acrylic coating may comprise at least in a portion thereof one or more rheology modifying compounds that assist the coating in striking into the front face slurry surface layer.

The acrylic surface coating may comprise any of a variety of acrylic polymer resins having a glass transition temperature (T_{g}) that is in a range of from about 15°C to about 50°C and preferably about 20°C -30°C, for example, those surface coating materials set forth above.

The combination of polymers and acrylic coatings used preferably can produce a monomer, such as methyl acetate, ethyl acetate, butyl acetate, or a combination thereof. A desirable minimum film formation temperature of about 15°C to about 30°C has been established from use of ethyl acetate monomers or a combination of monomers comprising methyl acetate and butyl acetate. Of course, the type of monomer that is formed is dependent on the interaction that occurs in the reaction during curing between the polymer additive and the acrylic coating.

The acrylic or other copolymer surface coating may be added well after the gypsum board has been completed, that is, cured and dried, or even after the gypsum board is in an installed state at the work site, since the underlining matrix of dense gypsum and additive material provides a good bonding surface for the copolymer surface layer.

For added bonding strength between the polymer additives and the copolymer surface layer, it is possible to apply the co-polymer surface layer, for example, and the overlying acrylic layer, either before or during the curing process. Application of the copolymer layer prior to the completion of curing of the bonds formed between the polymer additive and the acrylic permits the number of such bonds to be multiplied. These bonds are maintained and strengthened during the curing process since the polymers are cured together to produce a physical, as well as chemical bond, and thus result in a stronger and more durable surface coating in the final gypsum board product.

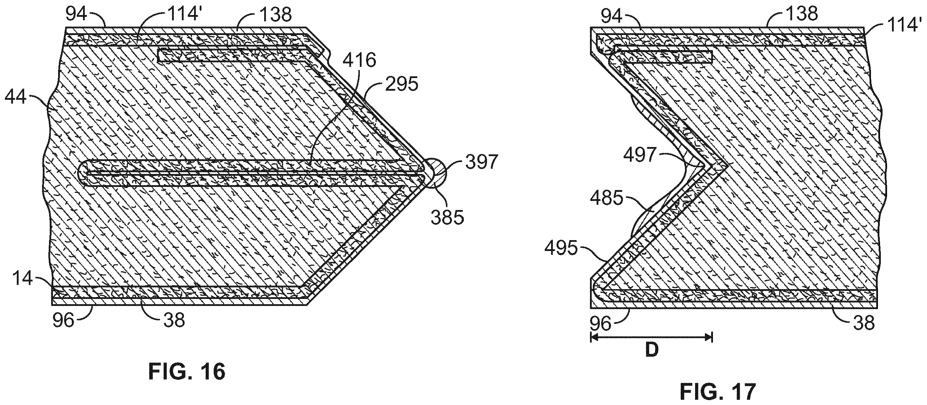

Referring again to FIG. 7, a completed inventive gypsum board product 190, manufactured according to the process of the parent application, is illustrated in partial cross-section. In the gypsum board product 190, a core slurry 44 is essentially encased in a sheath comprising a glass mat face sheet 14, folded over the longitudinal board edge, sometime referred to herein as a "machine edge", and by the top (back) embedded sheet 114', disposed over the hydrated core slurry 44 and the folded over edge of embedded sheet 14 that is disposed on the top surface, as shown. Dense slurry 38 and 138 are disposed over the entire outer surface of the glass fiber embedded sheets 14 and 114' so that a minimal amount, if any, glass fibers are exposed at the surface. The inventive process provides for corners at the longitudinal edges 95, one of the machine edges being shown in FIG. 7. Alternative embodiments of the machine edges are possible, and some of these are described below with reference to FIGS. 16-19.

Testing of acrylic coated compound has revealed an increase in tensile strength, especially when utilized with water resistant additives in the core and polymer modified dense gypsum slurry layers. The testing results of certain samples indicate an average tensile strength of a minimum of about 100 kPa (15 psi) to a maximum of about 235 kPa (34 psi), meeting and exceeding the minimum requirements and standards promulgated by the International Conference of Building Officials. The data collected appears to provide support to the theory of intermolecular bonding between the performance enhancing acrylic coatings and the polymer covering embedded in at least the dense slurry layer 38,138 of the top face sheet 14. Additional intermolecular bonding may be obtained by varying the acrylic or other compounds used, or by using a combination of compositions, or varying other parameters such as the solution strength, the application rate and the time and conditions of curing. Many of the variant manufacturing processes have been found to increase the final gypsum board products' tensile strength and other desirable characteristics of the final commercial board.

Alternatively, the creased edges of the bottom embedded sheet 14 may be creased to produce opposing formed tongue and groove board edges 295,495, and 595, as shown in FIGS. 16-19, respectively. The tongue and groove board edges 295 are shown as having a "V" shape which provides benefits, such as a greater facility in manufacturing. Preferably, the tongue board edges are produced in any of a number of opposing and complimentary shapes, examples of which are shown in FIGS. 16-17.

The tongue and groove board edges 295,495 when brought together, with the edges in engagement, cause the board edges to set against each other to avoid gaps therebetween. An adhesive used between the board edges fills the gap between the boards and affixes the boards together, obviating the use of a tape to cover the gap between the boards.

One optional feature is for the longitudinal edges 295,495 to be each reinforced by a folded over strip 416 that is embedded within the core gypsum layer 44 of the board. Preferably, one folded over strip 416 is disposed in machine edge 295 and a second strip (not shown) may be disposed in the opposed edge for symmetry, but may be unnecessary. The reinforcing strips are preferably made of a fiberglass mat extending inwardly from the edges 295,495 for a short distance, about one to 15 cm (six inches), and most preferably about 8.75 cm (three and a half inches). The folded over strips 416 may be embedded within the core slurry layer 44 as the gypsum slurry is deposited on bottom embedded sheet 14, and a horizontally extending wheel, similar to a creaser wheel, may be used to fold over the mat, without breaking the fibers excessively, and also simultaneously embedding the mat within the gypsum layer. Alternatively, depositing an initial layer of core slurry 44, then the folded over strip 416, and then a covering layer of core slurry 44 before depositing the top sheet 114 may accomplish the goal. While the folded overstrip 16 is shown as being flat, the ideally preferred arrangement, the mere presence of the folded over strip, providing the reinforcing function, is beneficial irrespective of the orientation of the strip 16 relative to the embedded sheets 14, 114.

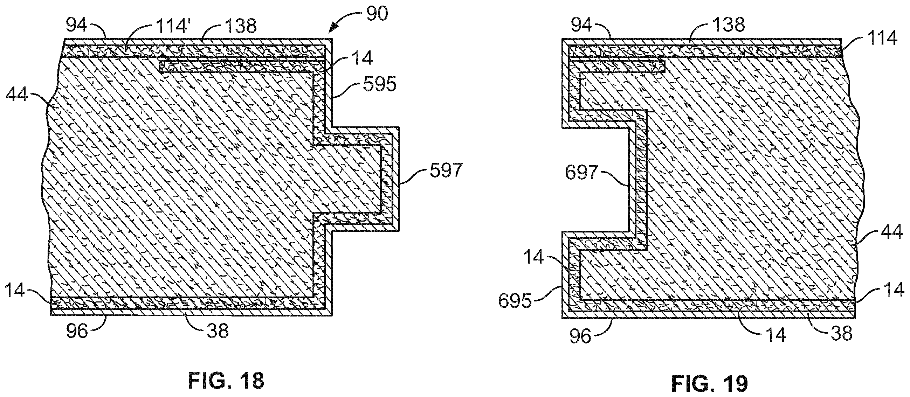

It may be desirable to form the longitudinal edge in a standard tongue and groove shape as shown by machine edges 599k, in FIGS. 18 and 19, respectively. One longitudinal machine edge is formed as the tongue and the other longitudinal edge is formed as the groove. This allows for a centered interconnection of the edges of two adjacent boards when they are installed edge-to-edge at the construction site. Moreover, using either of the two embodiments shown in FIGS. 16-17 or 18-19, respectively, on any other appropriate combination of complementary shapes, the desired effect is to produce an orientation and positioning of the tongue and groove joints, relative to the top and bottom surfaces 94,96, so that complete engagement of tongue within the corresponding groove of an adjacent board forms a smooth continuous surface at the joint. Ideally, the engagement is smooth enough so that standard joint tape to cover the joint may be unnecessary.

The preferred embodiment for use of the inventive tongue and groove arrangement comprises the longitudinal edges 295,495 having the "V" shapes. The "V-shaped" embodiment provides a number of advantages, including ease of forming the edges 295,495, the greater flexibility in installation, and the more accurate and exacting tolerances that derive from a single internal bead 397 disposed on the corner, rather than edges having two or more internal corners, as do edges 595, (FIGS. 18 and 19). This results from the ability to engage the two edges 295,495 so that the bead 397 meets the corner 497 of machine edge 495, preferably in a plane containing the midpoint between surfaces 94,96. The engagement of the bead 297 and the trough 49, formed by the corner in machine edge 495, produces a smooth, continuous surface transition between two adjacent boards when they are brought into alignment and installed on the studs to form a wall surface. That is, the manufacturing process provides a tolerance so that the lateral dimensions from the trough 497 to each of the surfaces 94,96 matches the corresponding dimensions between the ridge or bead 297 and the corresponding surfaces 94,96 of the adjacent board. Thus, when the ends 295,495 are engaged, the respective surfaces 94,96 of the adjacent boards are in the same plane, and the joint itself essentially does not have any gap.

Although other shapes are possible for the board machine edges, for example, a set of board edges having smooth convex and concave edges, respectively, (not shown) or other profile shapes such as the wedge V shape does not extend over the complete depth of the board, which alternative designs also provide a nested fit, one into the other, are possible. While a convex-concave arrangement for the edges may be easier to form, the ridge 297 and trough 497 arrangement is considered more preferable because of the greater endurance and tighter seal that is formed at a corner of two surfaces, where moisture would be required to seep through a discrete point, which point can act as a bottleneck to moisture penetration.. A smooth concave/convex surface, not having a corner, would not present this extra barrier to moisture penetration, as does the versions with the corners shown in FIGS. 16-19.

Conversely, the concept that one corner providing a benefit can be extrapolated to two or more such corners may appear on the surface as a logical extrapolation. However, as can be seen from the embodiment illustrated in FIGS. 18 and 19, the tolerance dimension of the tongue 597 and groove become somewhat more difficult to maintain, especially for boards having a thickness of 1.25 cm (½ inch) or smaller. Nevertheless, such tolerances are obtainable with the improvements in the equipment for forming the machine edges, as described below. Thus, as the technology improves, tolerances can be met more precisely and other, more complex shapes for the edges are contemplated that will provide even more of a moisture barrier because of the presence of additional corner bottlenecks, or even dedicated pockets in the joint that are capable of collecting moisture and secreting it within the joint for later evaporation.

The process and equipment for the formation of the edge surfaces 295,495 and 595, , is essentially the same as that of edger shoes 158 (FIGS. 4-6), except that the surface coming into contact with the machine edge is shaped so as to have a complementary surface and thus form the desired shape in the machine formed edges 295,395 and 595,. Thus, an edger shoe on one side of the line would have a complementary edger shoe on the other side of the line forming for the V-shape, or the tongue and groove shapes, in the machine edges prior to the setting of the gypsum.

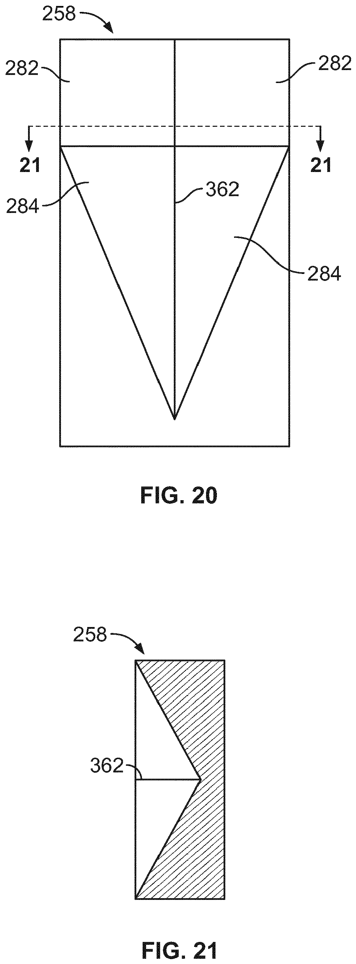

One embodiment contemplated is for the edger shoe to have a leading edge, that is, the edge which contacts the previously formed edge of the moving board line first, in a rigid line or bead, the depth of which increases the further "downstream" one proceeds relative to the board line, until in profile it matches the desired profile of the machine edge, as shown in FIGS. 16-19. Some modifications may be necessary at the edger shoe, for example, the edger shoe 158 shown in FIGS. 4-6, to lengthen the longitudinal direction and increase the length of the contacting surface of the edger shoe, and the time that contact continues, so that the shape forming features disposed on the contacting surface of the edger shoe have a greater amount of time and surface to provide the edge surface formed features. It should be noted that the alternative edger shoes described below may not be illustrated to scale, and are essentially illustrative of the concepts, in FIGS. 20-29.

An additional aid to forming the edges 295,495 and 595, is the use of a scorer or creaser in the manufacture turning line to provide crease lines in the fiber mats, as described above in the context of creasing the corners of the flat surface edges of the board edge as shown in FIG. 7. It is possible to provide additional such creasers in the process disposed in line and prior to the folding over step of the fiber mat 14, so that, for example, one additional crease line is provided at each of the expected positions 297,497 of the V-shaped board edges 295,495. It is contemplated that the creasers will not necessarily shape the fiber mat into the final desired shape, as shown in FIGS. 16-19, but the creases will provide an indentation, preferably at the desired tolerances, so that the subsequent folding and edge forming steps occurring down stream at the edger shoe machine edge forming station (see FIGS. 5 and 6) will be directed to facilitate the final forming step of the desired position in the fiber mat, and thus the shape of the edges 295,495 and 595, will take the desired form shown in FIGS. 16-19.

To form the tongue and groove longitudinal machine edges 295,495 or 595, a similar procedure and equipment may be used as that used to form flat edge 95 (FIG. 7), except two additional sets of creases will be required, one each forming the crease lines for the corners of the tongue 597 and groove.

Forming tongue and groove longitudinally extending machine edges 295,495,595, may be facilitated by the addition of water to the edges at or before the point in the gypsum forming line at which the edge of the moving gypsum board comes into contact with the edger shoes. The water provides plasticity to the board edges and thereby enables the sharper and more angular formation of the tongue and groove shapes to correspond more precisely to the shapes of the edger shoes. Sharp edges that are formed by the tongue and groove shape of the edger shoes may be more susceptible to structural damage than is that of a flat edge surface, especially when the corners are acute s shown in FIG. 16. To strengthen the formed machine edges, a polymeric material may be added to the water at the edger shoes, to produce an extra thick coating of polymeric additive material to the longitudinal edges 295,495 and 595. This will add strength to the edges when set. Polymeric materials that may used in conjunction with gypsum board are discussed in subsequent paragraphs in relation to the general additive scheme.

These types of edge finishing of the formed or machined gypsum board edges as described above are particularly suited for boards that will experience severe or harsh weather conditions, for example, in gypsum boards used in an exterior application where the gypsum board will be exposed to external environmental conditions. Several enhancements to the gypsum board are described as rendering the board even more suitable for such an application, so as to avoid deterioration of the gypsum in the board that may result from moisture and other external weather conditions.

For providing the formed or three dimensional shaped machine edges, such as those shown in FIGS. 16-19, modified edger shoes, having a specified shape, are required to provide the tongue in groove shapes to the machine edges that are disposed on opposite sides of the gypsum board. Referring now to FIGS. 20-25, illustrated are specially modified edger shoes 258,358 and 558,658.

Another embodiment of a modified edger shoe 258 is shown in FIGS. 20 and 21, which edger shoe 258 provides a machine edge 495 of one lateral side of a moving gypsum board essentially as shown in FIG. 17. As can be seen, the edger shoe 258 has a ridge shaped protrusion that includes a longitudinally extending bottom trough line 362, that will correspond to the formed ridge or bead 397 of the machine edge 295 shown in FIG. 16. To obtain the proper three-dimensional shape of the edges 295,495 and 595, the thickness of the edger shoe 258, and of the other shoes described below, may be somewhat thicker, as shown in the cross-sectional view of FIG. 21, and may be as thick as or thicker than the edger shoe 158, shown in the plan view of FIG. 6.

The edge forming process step is performed when the slurry 44 is still fairly fluid and plastic, at a time very soon after the board has been essentially formed, but before final formation of the board has been established and setting of gypsum slurry commences. Thus, the edge 295 can be formed by receiving the gypsum slurry that is extended into the trough 360 as pressure is simultaneously applied to the top of the moving gypsum board line, the pressure which is exerted by edger bar 150 (FIG. 4) on the top surface 94 causes the top surface to inject the gypsum slurry into the space between the layers of fiber mat, as described above. Triangular shaped surfaces 284 provide a gradual angle for the expansion of the slurry and mat combination to extrude into, thereby forming the surface 295, and parallel surfaces 282 provide a flattened surface tending to smooth out the gypsum slurry surface on the machine edge 295.

Conversely, the gypsum board will also experience a similar change of the shape at the opposite machine edge 495 (FIG. 17), except that rather than providing a ridge surface 295, the protruding ridge will impress the V-shaped groove into the edge 495, which groove will correspond and be oppositely oriented in relation to the ridged surface of edge 295. When the two edges 295,495 of adjoining boards are brought into engagement at the construction site, the shape and orientation provide for a complete infill of the gap between them, and the opposing surfaces engage essentially completely, so as to provide a moisture barrier and thus to avoid moisture penetration therethrough. Additional measures, as discussed below, can be taken to further enhance the moisture barrier properties of the joint that will develop between adjacent board edges upon final installation at the construction site.

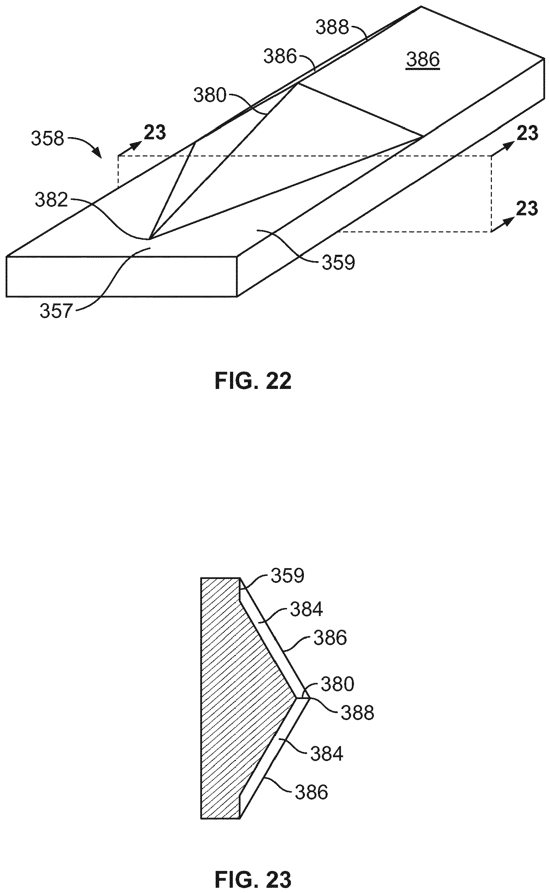

Referring to FIG. 22, the second of the pair, a modified edger shoe 358, for providing the particular set of edge surface of FIG. 17. The edger shoe 358 produces the grooved surface on machine edge 495 and a trough or depression 497, as shown. Thus, the leading edge 357 of the shoe 358 begins at a flat surface 359, and a ridge 380, beginning at point 382, rises from the surface 359 and is flanked by the surface 359. The ridge 380 rises to a height equals the depth dimension D, and is calculated to provide a desired groove depth in the edge 495. The sides 384, on either edge of the ridge 380, slope to provide the edge surface 52 or edge 495. When the appropriate depth D has been reached, the angled sloping sides 384 define a pair of surfaces 386 meeting at an apex 388, which maintain the shape until the trailing edge of shoe 358 is reached. The longitudinal dimension of the surfaces 386 and apex 388 are of sufficient length to produce a smooth surface 295, with a well defined trough 497.

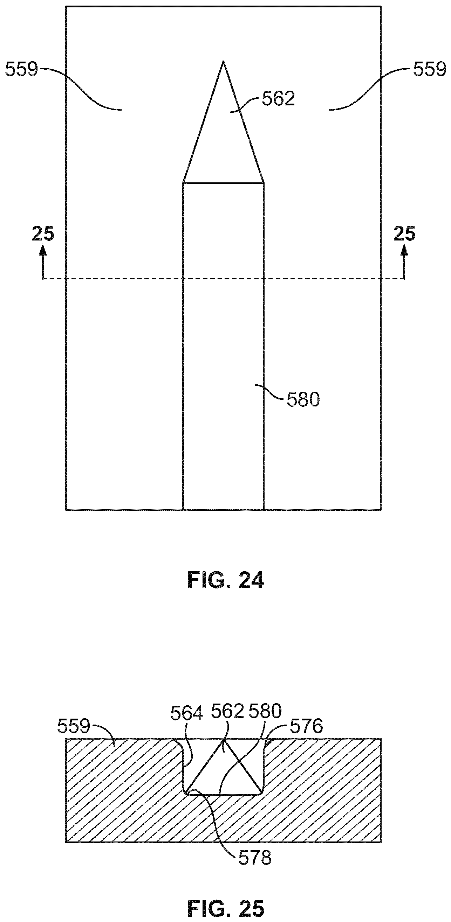

For providing the surfaces 595, shown in FIGS. 18 and 19, still yet other modified edger shoe embodiments 558, are shown in FIGS. 24-26. The shoe embodiment 558 provides the surface configuration of machined edge 595 (FIG. 18), and is similar to that of modified edger shoe 258 shown in Fig. 20, except that rather than having a trough with a centrally disposed corner line 362, the valley shape of the depression 560 provides for a smooth bottomed surface 580 that extends toward the trailing end 556 of the edger shoe 558. At the leading end, the flat surface 559 leads into a triangularly shaped intermediate transitional depression 562 that permits the gradual extrusion of dense slurry and of the protruding portions of surface 595, which then reaches a bottom at the smooth surface 580, as shown in the cross-sectional view of FIG. 18. While the edges are shown to be sharp in all of the views herein, it may be considered preferable to have curved corners 576, 578 at the transitional corners between, for example, surfaces 562, 580, or 559 and walls 564 of through 560, as shown in FIG. 25., so as to avoid tearing of the underlying fiber mat, or to avoid the edger shoes from scrapping off the dense slurry layer 38, 138 from the surface of the board edges 295,495,595.

FIG. 16 shows the edge 295 as having the angled surfaces that meet at ridge 397 extend all the way to the top and bottom surfaces 94, 96 of the finished board.

Referring now again to FIGS. 16 and 17, but essentially applicable to all embodiments of the contoured edge surface invention described above, is the optional addition of an epoxy or other adhesive that can seal the gap between the edge surfaces of adjacent boards when these engage during construction. The adhesive may be any form, for example as a coating 485 on the surface of the edges, as shown in FIG. 17. Alternatively, the manufacturing process may lay down a bead, such as the bead 385 applied to the tip of the ridge 397, as is shown in FIG. 16. Alternatively, one inwardly directed surface may have disposed thereon a coating 485 and the other surface may have a bead 385.

The shape of the bead 385 of the surface coating 485 is not critical, but sufficient adhesive material 385,485 is needed so that in the case where adhesive is applied on only one surface 295,495, the adhesive material 385,485 is spread out and adheres to the polymeric additive entrained in the surface gypsum coating 38 or 138 of the opposed edge, so as to seal the edges and the adhesive material adheres to both surfaces.

If both surfaces 295 and 495 have an adhesive disposed thereon for example, as shown in FIGS. 16 and 17, when the surfaces are brought together during installation the adhesive materials may be chosen to have the same or different components, such that when the ridge 397 meets the bottom of valley 497, the adhesive materials, which are already adhered on their own respective surfaces, adhere to each other, so as to more easily enable the formation of a seal in the gap between them, and thereby providing a more effective moisture barrier. Good candidates for such adhesive materials are the preferred epoxy or other polymeric materials that can also provide for cross-linking bonds with the entrained polymeric additives in the dense slurry gypsum layer with or without curing. However, any other caulk or adhesive, organic or inorganic, may also be used, for example, on plastic resin or a thermosetting powdered glass or phosphate cement, that can be, for example, heat activated at the time of installation.

Providing a bead on one or more edges of the boards is preferable but an adhesive may also be placed at the joint during the installation process, for example, by laying down a bead of acrylic or silicone adhesive material on the adjacent surfaces that can directly bond to the polymeric additive that is entrained in the surface layers 38,138 of the board, and also in the surface of the board edges. However, use of an adhesive material, as will be described below, that activates its adhesive properties upon contact, or after a seal (not shown), covering the adhesive material 395,495, is broken.

The material to be used as an adhesive may be any of a number of good weather sealants, which are essentially impervious to vapor passage, and which do not deteriorate in that characteristic over time. Good candidates are, for example, certain glues used for attaching gypsum board or tile backer boards, silicone adhesives, and some acrylics. The preferred adhesive for a number of practical reasons is butyl acrylic.

As previously described, the board may be provided with tongue and groove edges 295,495 and 595, as shown in FIGS. 16, 17, 18 and 19. The use of an adhesive material 397,497 or beads disposed along the edges 295,495 and 595, may be provided to seal the gap between the machine edges when these are seated or attached to each other during construction. Moreover, the tongue and groove interference fit between the edges offers an improved structural component to the assembled boards, which better resists the effects of wind shear.

It is evident that the joints 295,495 and 595, provide corresponding pairs that are capable of abutting each other in a nested relationship to provide improved shearing resistance. Moreover, when joined to each other at edges having formed surfaces, further lateral movement out of the plane of the board edges 295,495 and 595, is inhibited. That is, when the ridge 397, of the first board edge 295, shown in Fig. 16, is inserted into trough 497 of the second board edge 495, the abutting relationship of the board edges is retained, and the board edges are not liable to bend away from the studs or other surface on which they are mounted and attached. The board edges 295,495 being mutually supporting, are better able to maintain a smooth surface at the common joints and to do so while absorbing greater stresses and withstanding more severe weather conditions for longer periods.

The ability to retain a smoothly flowing joint, without discontinuities, is further enabled by the precise dimensions and angular relationship of the surface of board edges 295,495 and 595, respectively. Optimal dimensioning and orientation of the machine board edges will result in increasingly smooth surfaces and a continuous joint when the edges engage each other and on in the lifetime of the wall.

The use of tongue and groove edges in conjunction with an adhesive allows an entire exterior wall assembly to be constructed with a single layer of gypsum panel composite sheathing that offers an uninterrupted singly ply weather barrier surface.

Moreover, because it is not always desired that the sheathed wall of a building be completely impervious to moisture or water passage, it may be desirable to have a controlled amount of moisture to penetrate the single-ply sheathed gypsum board panels, and thus to provide improved surface water penetration resistance, while permitting water vapor to be exuded through the barrier. Thus, it is one feature of this invention that the water vapor resistance may be made adjustable by variation of the amount of additive polymeric material that is entrained in the surface layers of the gypsum board panels.

It has been noted that water or vapor can also enter into a wall of a building that is unprotected by wrapping in a conventional vinyl covering. That is, for a single-ply gypsum panel to be firmly attached to the underlying framework, usually comprising wood slats or studs, fasteners of one type or another must penetrate through the board to attach to the studs. The opening through the gypsum board that the fastener creates usually is a point of access for moisture to enter. The screw or nail, in penetrating completely through the board, causes a leak path for moisture and surface water to enter through the barrier. Conventional building wrap covering the outer structural surface, for example, a Tyvek^{®} sheath or covering over plywood, does not experience this leakage through the fastening member penetration holes because of the outer covering, which is water resistant. Thus, a mechanism for avoiding water or moisture penetration along the fastener holes is required without the necessity of additional steps in the construction process, such as covering the structur5e with water impervious nylon layers.

As is known, the size of gypsum board panels has been standardized to four feet by eight feet, and the underlying framework to which the panels are attached are either constructed on 16" or 24" centers. That is, the centers of the adjoining studs are usually 16" or sometimes 24" apart, thereby dividing the board into either two parts or three parts between the fastening points. Once the positions of the attachment points are established, it has been found beneficial to provide for a mechanism that will seal or plug the insertion points where the fasteners are expected to penetrate through the board.

The inventive gypsum board panels having entrained polymers provides a polymer matrix effectively embedded within the gypsum base. Chemical bonding of the polymer throughout the gypsum board essentially creates a multiple layer, water impervious panel with improved strength that is integrally retained. The entrained polymers also provide specific sites for chemical adhesion by other polymers.

At the longitudinal edges 95 where two panels are formed together, the chemical bonding and cross-linking dramatically improves the strength of joined panels at each joint, and essentially bonds separate panels to each other to such a degree that the panels may be considered a single conglomerate panel. Moreover the matched profiles of the complementary machine edge surfaces establishes the relative height of the surfaces 94,96 of adjacent boards, and ensures that they are continuous, and flat. Again, no definable intersection between components/layers at the edges 95 is readily apparent if the installation is properly completed, and this eliminates areas in which moisture may migrate into and weaken the panel or harbor mold and prevents bacterial growth.

While this invention has been described particularly as it applies to glass reinforced gypsum board panels, the invention can also be applied to other exterior sheathing building components such as cement board, plaster board, plastic, and fiberglass panels.

The above-described embodiments are illustrative of this invention. Modifications and alterations of the disclosed embodiments are within the ability of persons having ordinary skill in the gypsum board and exterior sheathing art, and this invention is not intended to be limited to the description of the disclosed embodiments, the invention being limited only by the following claims and equivalents thereof.

## Claims

1. A gypsum board panel comprising:
two facing main surfaces, and at least one machine edge surface (95) and at least one butt edge surface, at least one of the surfaces of the board including an outer gypsum layer in which a polymer additive has been entrained;
**characterized in that**
the at least one machine edge surface (95) having three-dimensional features,
the gypsum board panel further comprising an adhesive material (385) disposed on said at least one machine edge surface (95), said adhesive material (385) being capable of forming chemical cross-linking, co-polymer bonds with said polymer additive entrained within said outer gypsum layer.

2. The gypsum board panel according to Claim 1 wherein said gypsum board panel further comprises first and second oppositely disposed machine edge surfaces, said first and second machine edge surfaces having corresponding complementary three-dimensional engaging shapes relative to each other (297, 497), enabling adjacent gypsum board panels to engage each other at the complementary machine edge surfaces so as to provide a smooth, continuous surface across the main surfaces of said adjacent gypsum board panels when two complementary machine edge surfaces of two adjacent gypsum board panels are brought into an engaging relationship, and wherein chemical bonds are formed between the adhesive material (385) and the additive entrained within said outer gypsum layer of the machine edge surface (95) of the adjacent gypsum board panel.

3. The gypsum board panel according to Claim 1 wherein said gypsum board panel further comprises a first machine edge surface and a complementary second machine edge surface, said first machine edge surface having a first adhesive material disposed thereon and said second machine edge surface having a second adhesive material disposed thereon, said first and second adhesives each containing components for forming chemical cross-linking, co-polymer bonds with the other adhesive material.

4. The gypsum board panel according to Claim 3 wherein both said first adhesive material and said second adhesive material being in an inactive condition, and being activated when said first machine edge surface engages an oppositely disposed second machine edge surface of an adjacent gypsum board panel, the adhesive material on one machine edge surface of first board becoming fluid and intermixing with the adhesive material disposed on the complementary machine edge surface of an adjacent gypsum board panel, thereby forming chemical cross-linking, co-polymer bonds between the adhesive materials.

5. The gypsum board panel according to Claim 1, said three-dimensional features of said at least one machine edge surface (95) further comprising an outwardly extending projection (295), the shape of the projection corresponding to a groove (495) in the complementary machine edge surface (95) of an adjacent gypsum board panel, the complementary machine edge surfaces of the adjacent panels providing for an engaging relationship at the machine edges of the adjacent gypsum board panels.

6. The gypsum board panel according to Claim 5, wherein said gypsum board panel further comprises first and second oppositely disposed machine edge surfaces, said first and second machine edge surfaces having corresponding complementary three-dimensional engaging shapes (297, 497) relative to each other enabling adjacent gypsum board panels to engage each other at the complementary machine edge surfaces so as to provide a smooth, continuous surface across the main surfaces of said adjacent gypsum board panels when two complementary machine edge surfaces of two adjacent gypsum board panels are brought into an engaging relationship.

7. The gypsum board panel according to Claim 6, wherein said outwardly extending projection of said first machine edge surface (95) is in the shape of a ridge (295) that corresponds to a similarly shaped complementary angled groove (495) in the second machine edge surface (95).

8. The gypsum board panel according to Claim 7, wherein said first machine edge surface (95) further comprises a shoulder portion adjacent both of two bases defining the outwardly extending ridge (295), each said shoulders extending between one base of the ridge (295) and the associated main surface of said gypsum board panel, and the second machine edge surface (95) further comprises a shoulder portion adjacent each of the rims of said angled groove (495) extending between one of the rims and the associated main surface of said gypsum board panel, the shoulders and three-dimensional features of each of the machine edge surfaces (95) being shaped and oriented to engage the complementary surface of an adjacent gypsum board panel.

9. The gypsum board panel according to Claim 6, wherein said outwardly extending projection (295) of said first machine edge surface (95) is in the shape of a rectangular shaped ledge having a corresponding similarly shaped complementary depression disposed in the second machine edge surface (95).

10. The gypsum board panel according to Claim 6, wherein said outwardly extending projection (295) of said first machine edge surface (95) is in the shape of a convex curved protrusion and the second machine edge surface (95) has a corresponding similarly shaped complementary concave depression.

11. A method of forming a gypsum board panel according to claim 1 comprising:
a) providing two facing sheets for forming two main surfaces of a gypsum board;
b) depositing an amount of core gypsum slurry (44) between said two facing sheets, at least one of the main surfaces of the board including an outer gypsum layer in which a polymer additive has been entrained;
c) smoothing the at least two main surfaces of the sheets at a predetermined distance to provide a gypsum board having a predetermined thickness; **characterized in that**
d) depressing at least one three-dimensional feature in at least one of the machine edge surfaces (95) of the board; and
e) adding an adhesive (385) on said at least one three-dimensional feature in the machine edge surface (95) that can seal the gap between the edge surfaces of adjacent boards when these engage during construction, the adhesive (385) being adapted to provide for cross-linking bonds with the polymer additive entrained in the outer gypsum layer.

12. The method of forming gypsum board panel according to Claim 11, wherein said three-dimensional feature is formed in one of said machine edge surfaces (95) as an outwardly extending projection in the shape of a rectangular shaped ledge and said three-dimensional feature formed in the other of said machine edge surfaces is a corresponding similarly shaped complementary depression.

13. The method of forming gypsum board panel according to Claim 11, wherein said three-dimensional feature is formed in one of said machine edge surfaces (95) as an outwardly extending projection in the shape of a convex curved protrusion and said three-dimensional feature formed in the other of said machine edge surfaces is formed as a corresponding similarly shaped complementary depression.

14. The method of forming gypsum board panel according to Claim 11, wherein said three-dimensional feature is formed in one of said machine edge surfaces (95) as an outwardly extending projection in the shape of a ridge (295) and said three-dimensional feature formed in the other of said machine edge surfaces is formed as a corresponding similarly shaped complementary angled groove (495).

## Patentansprüche

1. Eine Gipsplatte, umfassend:
Zwei einander zugewandte Hauptoberflächen und mindestens eine maschinell bearbeitete Kantenoberfläche (95) und mindestens eine Stoßkantenoberfläche, wobei mindestens eine der Oberflächen der Platte eine äußere Gipsschicht einschließt, in welche ein polymeres Zusatzmittel vermengt worden ist;
**dadurch gekennzeichnet, dass**
die mindestens eine maschinell bearbeitete Kantenoberfläche (95) dreidimensionale Merkmale aufweist, wobei die Gipsplatte ferner einen Klebstoff (385) umfasst, der auf mindestens einer maschinell bearbeiteten Kantenoberfläche (95) angeordnet ist, wobei der Klebstoff (385) in der Lage ist, chemisch quer-vernetzende Copolymer-Verbindungen mit dem polymeren Zusatzmittel zu bilden, das innerhalb der äußeren Gipsschicht vermengt worden ist.

2. Die Gipsplatte nach Anspruch 1, wobei die Gipsplatte ferner erste und zweite entgegengesetzt angeordnete maschinell bearbeitete Kantenoberflächen umfasst, wobei die ersten und zweiten maschinell bearbeiteten Kantenoberflächen entsprechend komplementäre dreidimensionale eingreifende Formen relativ zueinander (297, 497) aufweisen, welches angrenzenden Gipsplatten ermöglicht an den komplementären maschinell bearbeiteten Kantenoberflächen ineinander einzugreifen, um eine glatte, kontinuierliche Oberfläche über die Hauptoberflächen angrenzender Gipsplatten bereitzustellen, wenn zwei komplementäre maschinell bearbeitete Kantenoberflächen von zwei angrenzenden Gipsplatten in eine eingreifende Beziehung gebracht werden, und wobei chemische Verbindungen zwischen dem Klebstoff (385) und dem Zusatzmittel gebildet werden, das innerhalb der äußeren Gipsschicht der maschinell bearbeiteten Kantenoberfläche (95) der angrenzenden Gipsplatte vermengt wurde.

3. Die Gipsplatte nach Anspruch 1, wobei die Gipsplatte ferner eine erste maschinell bearbeitete Kantenoberfläche und eine komplementäre zweite maschinell bearbeitete Kantenoberfläche umfasst, wobei die erste maschinell bearbeitete Kantenoberfläche einen ersten Klebstoff aufweist, der darauf angeordnet ist und die zweite maschinell bearbeitete Kantenoberfläche einen zweiten Klebstoff aufweist, der darauf angeordnet ist, wobei die ersten und zweiten Klebstoffe jeweils Bestandteile zur Bildung chemisch quer-vernetzter Copolymer-Verbindungen mit dem anderen Klebstoff enthalten.

4. Die Gipsplatte nach Anspruch 3, wobei sowohl der erste Klebstoff als auch der zweite Klebstoff in einem inaktiven Zustand sind, und aktiviert werden, wenn sich die erste maschinell bearbeitete Kantenoberfläche mit einer entgegengesetzt angeordneten zweiten maschinell bearbeiteten Kantenoberfläche einer angrenzenden Gipsplatte kuppelt, wobei der Klebstoff an einer maschinell bearbeiteten Kantenoberfläche der ersten Platte flüssig wird und sich mit dem Klebstoff vermischt, der an der komplementären maschinell bearbeiteten Kantenoberfläche einer angrenzenden Gipsplatte angeordnet ist, um dadurch chemisch quer-vernetzende Copolymer-Verbindungen zwischen den Klebstoffen zu bilden.

5. Die Gipsplatte nach Anspruch 1, wobei die dreidimensionalen Merkmale der mindestens einen maschinell bearbeiteten Kantenoberfläche (95) ferner einen sich nach außen erstreckenden Vorsprung (295) umfassen, die Form des Vorsprungs einer Nut (495) in der komplementären maschinell bearbeiteten Kantenoberfläche (95) einer angrenzenden Gipsplatte entspricht, die komplementären maschinell bearbeiteten Kantenoberflächen der angrenzenden Platten für eine ineinandergreifende Beziehung an den maschinell bearbeiteten Kanten der angrenzenden Gipsplatten sorgen.

6. Die Gipsplatte nach Anspruch 5, wobei die Gipsplatte ferner erste und zweite entgegengesetzt angeordnete maschinell bearbeitete Kantenoberflächen umfasst, wobei die ersten und zweiten maschinell bearbeiteten Kantenoberflächen entsprechend komplementäre dreidimensionale eingreifende Formen (297, 497) relativ zueinander aufweisen, welches angrenzenden Gipsplatten ermöglicht an den komplementären maschinell bearbeiteten Kantenoberflächen ineinander einzugreifen, um eine glatte, kontinuierliche Oberfläche über die Hauptoberflächen angrenzender Gipsplatten bereitzustellen, wenn zwei komplementäre maschinell bearbeitete Kantenoberflächen von zwei angrenzenden Gipsplatten in eine eingreifende Beziehung gebracht werden.

7. Die Gipsplatte nach Anspruch 6, wobei der sich nach außen erstreckende Vorsprung der ersten maschinell bearbeiteten Kantenoberfläche (95) in Form einer Erhöhung (295) ist, die einer ähnlich geformten abgewinkelten Nut (495) in der zweiten maschinell bearbeiteten Kantenoberfläche (95) entspricht.

8. Die Gipsplatte nach Anspruch 7, wobei die erste maschinell bearbeitete Kantenoberfläche (95) ferner einen Schulterabschnitt angrenzend an beide der zwei Basen umfasst, der die sich nach außen erstreckende Erhöhung (295) definiert, wobei sich jede der Schultern zwischen einer Basis der Erhöhung (295) und der zugehörigen Hauptoberfläche der Gipsplatte erstreckt, und die zweite maschinell bearbeitete Kantenoberfläche (95) ferner einen Schulterabschnitt angrenzend an jeden der Ränder der abgewinkelten Nut (495) umfasst, der sich zwischen einem der Ränder und der zugehörigen Hauptoberfläche der Gipsplatte erstreckt, wobei die Schultern und dreidimensionalen Merkmale jeder der maschinell bearbeiteten Kantenoberflächen (95) geformt und orientiert sind, mit der komplementären Oberfläche einer angrenzenden Gipsplatte ineinanderzugreifen.

9. Die Gipsplatte nach Anspruch 6, wobei der sich nach außen erstreckende Vorsprung (295) der ersten maschinell bearbeiteten Kantenoberfläche (95) in Form einer rechtwinklig geformten Kante ist, die eine entsprechende, ähnlich geformte komplementäre Vertiefung in der zweiten maschinell bearbeiteten Kantenoberfläche (95) aufweist.

10. Die Gipsplatte nach Anspruch 6, wobei der sich nach außen erstreckende Vorsprung (295) der ersten maschinell bearbeiteten Kantenoberfläche (95) in Form eines konvex gekrümmten Vorsprungs ist, und die zweite maschinell bearbeitete Kantenoberfläche (95) eine entsprechende, ähnlich geformte, komplementäre konkave Vertiefung aufweist.

11. Ein Verfahren zum Formen einer Gipsplatte nach Anspruch 1, umfassend:
a) Bereitstellen von zwei einander zugewandten Verkleidungen zum Formen der zwei Hauptoberflächen einer Gipslatte;
b) Ablagern einer Menge eines Kern-Gipsschlamms (44) zwischen den zwei einander zugewandten Verkleidungen, wobei mindestens eine der Hauptoberflächen der Platte eine äußere Gipsschicht umfasst, in die ein polymeres Zusatzmittel vermengt worden ist;
c) Glätten der mindestens zwei Hauptoberflächen der Verkleidungen bei einem vorbestimmten Abstand, um eine Gipsplatte bereitzustellen, die eine vorbestimmte Dicke aufweist; **gekennzeichnet durch**
d) Drücken mindestens eines dreidimensionalen Merkmals in mindestens eine der maschinell bearbeiteten Kantenoberflächen (95) der Platte; und
e) Hinzufügen eines Klebstoffes (385) auf das mindestens eine dreidimensionale Merkmal in der maschinell bearbeiteten Kantenoberfläche (95), das die Lücke zwischen den Kantenoberflächen der angrenzenden Platten abdichten kann, wenn diese während Konstruktion ineinandergreifen, wobei der Klebstoff (385) angepasst ist, für quer-vernetzende Verbinden mit dem in der äußeren Gipsschicht vermengten polymeren Zusatzmittel zu sorgen.

12. Das Verfahren zum Formen von Gipsplatten nach Anspruch 11, wobei das dreidimensionale Merkmal in einer der maschinell bearbeiteten Kantenoberflächen (95) als ein sich nach außen erstreckender Vorsprung in Form einer rechteckig geformten Kante geformt ist und das dreidimensionale Merkmal, das in der anderen der maschinell bearbeiteten Kantenoberflächen geformt ist, eine entsprechende, ähnlich geformte, komplementäre Vertiefung ist.

13. Das Verfahren zum Formen von Gipsplatten nach Anspruch 11, wobei das dreidimensionale Merkmal in einer der maschinell bearbeiteten Kantenoberflächen (95) als ein sich nach außen erstreckender Vorsprung in Form eines konvex gekrümmten Vorsprungs geformt ist und das dreidimensionale Merkmal, das in der anderen der maschinell bearbeiteten Kantenoberflächen geformt ist, als eine entsprechende, ähnlich geformte, komplementäre Vertiefung geformt ist.

14. Das Verfahren zum Formen von Gipsplatten nach Anspruch 11, wobei das dreidimensionale Merkmal in einer der maschinell bearbeiteten Kantenoberflächen (95) als ein sich nach außen erstreckender Vorsprung in Form einer Erhöhung (295) geformt ist und das dreidimensionale Merkmal, das in der anderen der maschinell bearbeiteten Kantenoberflächen geformt ist, als eine entsprechende ähnlich geformte komplementär abgewinkelte Nut (495) geformt ist.

## Revendications

1. Un panneau de plaque de plâtre comprenant :
deux surfaces principales opposées, et au moins une surface d'arête usinée (95) et au moins une surface d'arête émoussée, au moins une des surfaces de la plaque comprenant une couche de plâtre extérieure dans laquelle un additif polymère a été injecté,
**caractérisé en ce que**
la au moins une surface d'arête usinée (95) possède des caractéristiques tridimensionnelles, le panneau de plaque de plâtre comprenant en outre un matériau adhésif (385) disposé sur ladite au moins une surface d'arête usinée (95), ledit matériau adhésif (385) étant capable de former des liaisons copolymères de réticulation chimiques avec ledit additif polymère injecté à l'intérieur de ladite couche de plâtre extérieure.

2. Le panneau de plaque de plâtre selon la Revendication 1 où ledit panneau de plaque de plâtre comprend en outre des première et deuxième surfaces d'arêtes usinées disposées à l'opposé, lesdites première et deuxième surfaces d'arêtes usinées possédant des formes de mise en prise tridimensionnelles complémentaires correspondantes l'une par rapport à l'autre (297, 497), de façon à permettre à des panneaux de plaque de plâtre adjacents d'entrer en prise l'un avec l'autre au niveau des surfaces d'arêtes usinées complémentaires de façon à fournir une surface continue lisse entre les surfaces principales desdits panneaux de plaque de plâtre adjacents lorsque deux surfaces d'arêtes usinées complémentaires de deux panneaux de plaque de plâtre adjacents sont placées dans une relation de mise en prise, et où des liaisons chimiques sont formées entre le matériau adhésif (385) et l'additif injecté à l'intérieur de ladite couche de plâtre extérieure de la surface d'arête usinée (95) du panneau de plaque de plâtre adjacent.

3. Le panneau de plaque de plâtre selon la Revendication 1 où ledit panneau de plaque de plâtre comprend en outre une première surface d'arête usinée et une deuxième surface d'arête usinée complémentaire, ladite première surface d'arête usinée possédant un premier matériau adhésif disposé sur celle-ci et ladite deuxième surface d'arête usinée possédant un deuxième matériau adhésif disposé sur celle-ci, lesdits premier et deuxième adhésifs contenant chacun des composants destinés à la formation de liaisons copolymères de réticulation chimiques avec l'autre matériau adhésif.

4. Le panneau de plaque de plâtre selon la Revendication 3 où à la fois ledit premier matériau adhésif et ledit deuxième matériau adhésif sont dans un état inactif et sont activés lorsque ladite première surface d'arête usinée entre en prise avec une deuxième surface d'arête usinée disposée à l'opposé d'un panneau de plaque de plâtre adjacent, le matériau adhésif sur une surface d'arête usinée d'une première plaque devenant fluide et s'intermélangeant avec le matériau adhésif disposé sur la surface d'arête usinée complémentaire d'un panneau de plaque de plâtre adjacent, formant ainsi des liaisons copolymères de réticulation chimiques entre les matériaux adhésifs.

5. Le panneau de plaque de plâtre selon la Revendication 1, lesdites caractéristiques tridimensionnelles de ladite au moins une surface d'arête usinée (95) comprenant en outre une saillie s'étendant vers l'extérieur (295), la forme de la saillie correspondant à une rainure (495) dans la surface d'arête usinée complémentaire (95) d'un panneau de plaque de plâtre adjacent, les surfaces d'arêtes usinées complémentaires des panneaux adjacents fournissant une relation de mise en prise au niveau des bords usinés des panneaux de plaque de plâtre adjacents.

6. Le panneau de plaque de plâtre selon la Revendication 5, où ledit panneau de plaque de plâtre comprend en outre des première et deuxième surfaces d'arêtes usinées disposées à l'opposé, lesdites première et deuxième surfaces d'arêtes usinées possédant des formes de mise en prise tridimensionnelles complémentaires correspondantes (297, 497) l'une par rapport à l'autre de façon à permettre à des panneaux de plaque de plâtre adjacents d'entrer en prise l'un avec l'autre au niveau des surfaces d'arêtes usinées complémentaires de façon à fournir une surface continue lisse entre les surfaces principales desdits panneaux de plaque de plâtre adjacents lorsque deux surfaces d'arêtes usinées complémentaires de deux des panneaux de plaque de plâtre adjacents sont placées dans une relation de mise en prise.

7. Le panneau de plaque de plâtre selon la Revendication 6, où ladite saillie s'étendant vers l'extérieur de ladite première surface d'arête usinée (95) est de la forme d'une crête (295) qui correspond à une rainure inclinée complémentaire de forme similaire (495) dans la deuxième surface d'arête usinée (95).

8. Le panneau de plaque de plâtre selon la Revendication 7, où ladite première surface d'arête usinée (95) comprend en outre une partie épaulement adjacente aux deux bases de deux bases définissant la crête s'étendant vers l'extérieur (295), chacun desdits épaulements s'étendant entre une base de la crête (295) et la surface principale associée dudit panneau de plaque de plâtre, et la deuxième surface d'arête usinée (95) comprend en outre une partie épaulement adjacente à chacune des bordures de ladite rainure inclinée (495) s'étendant entre une des bordures et la surface principale associée dudit panneau de plaque de plâtre, les épaulements et les caractéristiques tridimensionnelles de chacune des surfaces d'arêtes usinées (95) étant façonnés et orientés de façon à entrer en prise avec la surface complémentaire d'un panneau de plaque de plâtre adjacent.

9. Le panneau de plaque de plâtre selon la Revendication 6, où ladite saillie s'étendant vers l'extérieur (295) de ladite première surface d'arête usinée (95) est de la forme d'un rebord de forme rectangulaire possédant une dépression complémentaire de forme similaire correspondante disposée dans la deuxième surface d'arête usinée (95).

10. Le panneau de plaque de plâtre selon la Revendication 6, où ladite saillie s'étendant vers l'extérieur (295) de ladite première surface d'arête usinée (95) est de la forme d'une proéminence incurvée convexe et la deuxième surface d'arête usinée (95) possède une dépression concave complémentaire de forme similaire correspondante.

11. Un procédé de formation d'un panneau de plaque de plâtre selon la Revendication 1 comprenant :
a) la fourniture de deux feuilles opposées destinées à la formation de deux surfaces principales d'une plaque de plâtre,
b) le dépôt d'une quantité de pâte de plâtre noyau (44) entre lesdites deux feuilles opposées, au moins une des surfaces principales de la plaque comprenant une couche de plâtre extérieure dans laquelle un additif polymère a été injecté,
c) le lissage des au moins deux surfaces principales des feuilles à une distance prédéterminée de façon à fournir une plaque de plâtre possédant une épaisseur prédéterminée, **caractérisé par**
d) la dépression d'au moins une caractéristique tridimensionnelle dans au moins une des surfaces d'arêtes usinées (95) de la plaque, et
e) l'ajout d'un adhésif (385) sur ladite au moins une caractéristique tridimensionnelle dans la surface d'arête usinée (95) qui peut sceller l'espace entre les surfaces d'arête de plaques adjacentes lorsque celles-ci entrent en prise au cours de la construction, l'adhésif (385) étant adapté de façon à fournir des liaisons de réticulation avec l'additif polymère injecté dans la couche de plâtre extérieure.

12. Le procédé de formation de panneau de plaque de plâtre selon la Revendication 11, où ladite caractéristique tridimensionnelle est formée dans une desdites surfaces d'arêtes usinées (95) sous la forme d'une saillie s'étendant vers l'extérieur de la forme d'un rebord de forme rectangulaire et ladite caractéristique tridimensionnelle formée dans l'autre desdites surfaces d'arêtes usinées est une dépression complémentaire de forme similaire correspondante.

13. Le procédé de formation de panneau de plaque de plâtre selon la Revendication 11, où ladite caractéristique tridimensionnelle est formée dans une desdites surfaces d'arêtes usinées (95) sous la forme d'une saillie s'étendant vers l'extérieur de la forme d'une proéminence incurvée convexe et ladite caractéristique tridimensionnelle formée dans l'autre desdites surfaces d'arêtes usinées est formée sous la forme d'une dépression complémentaire de forme similaire correspondante.

14. Le procédé de formation d'un panneau de plaque de plâtre selon la Revendication 11, où ladite caractéristique tridimensionnelle est formée dans une desdites surfaces d'arêtes usinées (95) sous la forme d'une saillie s'étendant vers l'extérieur de la forme d'une crête (295) et ladite caractéristique tridimensionnelle formée dans l'autre desdites surfaces d'arêtes usinées est formée sous la forme d'une rainure inclinée complémentaire de forme similaire correspondante (495).
